# EUROPEAN PATENT SPECIFICATION

(11) **EP 2 617 772 B1**
(45) Date of publication and mention of the grant of the patent: **12.02.2020**
(21) Application number: 11824982.0
(22) Date of filing: 31.08.2011
(51) Int. Cl.: C08K 3/04, C08K 3/26, C08K 3/30, C08K 5/49, C08K 5/00, C08K 5/521, C08L 25/04, C08L 71/12

(54) **POLYPHENYLENE ETHER RESIN COMPOSITION AND MOLDED ARTICLE OF SAME**
POLYPHENYLENETHER-HARZZUSAMMENSETZUNG UND FORMKÖRPER DARAUS
COMPOSITION DE RÉSINE D'ÉTHER DE POLYPHÉNYLÈNE ET ARTICLE MOULÉ DE LADITE COMPOSITION

(30) Priority: 16.09.2010 JP 2010208126
(43) Date of publication of application: 24.07.2013
(73) Proprietor: Mitsubishi Engineering-Plastics Corporation, Tokyo 105-0021 (JP)
(72) Inventor: NORIKANE, Hiroshi, Hiratsuka-shi Kanagawa 254-0016 (JP)
(74) Representative: Hoffmann Eitle
(86) International application number: PCT/JP2011/069679
(87) International publication number: WO 2012/035976

(56) References cited:
- EP-A1- 1 950 249
- EP-A1- 2 196 500
- WO-A1-2010/047122
- JP-A- 59 096 142
- JP-A- 2002 309 102
- JP-A- 2003 147 200
- JP-A- 2004 155 928
- JP-A- 2011 108 802
- US-A1- 2008 245 270
- DATABASE CA [Online] CHEMICAL ABSTRACTS SERVICE, COLUMBUS, OHIO, US; 21 May 2003 (2003-05-21), MIYAMOTO, KAZUKI ET AL: "Poly(arylene sulfide) compositions with good laser focus stability, and optical pickup from them", XP002768511, retrieved from STN Database accession no. 2003:390062 -& JP 2003 147200 A (TORAY INDUSTRIES) 21 May 2003 (2003-05-21)

## Description

### Field of Invention

The present invention relates to polyphenylene ether resin compositions and shaped articles thereof. In detail, the invention relates to a polyphenylene ether resin composition improved in tracking resistance while the composition includes a carbon black giving a black color and an improvement in weather resistance, and to a shaped article of the polyphenylene ether resin composition.

### Background of Invention

Due to the need of protecting the environment and the need of saving energy, recently, a technology has been practically operated in which photovoltaic modules converting solar light energy into electricity are installed on exterior covers such as roofs of buildings, and the natural energy of solar light is converted into electric power to utilize the electricity to power the buildings as well as to sell excess power.

In order to collect electricity in a useful form, each photovoltaic module has connection structures such as junction boxes and connectors for the connection of cables between modules. Such photovoltaic module connection structures require not only mechanical strength as structural bodies but also the following properties.

### 1) Excellent heat resistance

Parts such as bypass diodes are disposed in junction boxes in order to minimally suppress the influence of decrease in the output of modules due to local shading on the surface of photovoltaic modules or due to a breakdown of battery cells. In the event of such shading or breakdown, the bypass diodes generate heat. Thus, the entirety of a junction box is required to have heat resistance.

### 2) Excellent impact resistance

It is often the case that junction boxes are installed outdoors such as on roofs as attachments to photovoltaic modules. Thus, the junction boxes are required to have a resistance to impact by flying objects, and, in particular, are required to exhibit impact resistance at a low temperature. Similarly to the junction boxes, photovoltaic module connectors are required to have impact resistance.

### 3) Excellent weather resistance

Photovoltaic module parts such as junction boxes are frequently installed outdoors, and therefore require weather resistance and durability to UV lights, weathering and changes in outside air temperature.

### 4) Excellent tracking resistance

Excellent tracking resistance (insulating properties) is required in order to prevent the occurrence of problems such as short circuits in wires within junction boxes.

Further, because these structures are installed on buildings, it is generally demanded that the structures be black to make their presence less noticeable as well as to improve weather resistance and further that the structures exhibit flame retardance.

Polyphenylene ether resins are excellent in characteristics such as heat resistance, electric characteristics, acid resistance and alkali resistance and have useful properties such as low specific gravity and low water absorptivity. Thus, they are widely used as materials for shaping various structures. Practically, polyphenylene ether resins are used as composite resin compositions by being blended with styrene resins in order to improve the shaping workability and impact resistance of the polyphenylene ether resins. Further, a polyphenylene ether resin/styrene resin composite composition is blended with a phosphate flame retardant in order to increase the flame retardance of the polyphenylene ether resin composition (for example, Patent Literature 1).

When such polyphenylene ether resin compositions are used as materials for shaping photovoltaic module connection structures, the obtainable structures can satisfy thermal and mechanical properties such as heat resistance and impact resistance. However, the structures are poor in weather resistance.

It is known that a polyphenylene ether resin composition is colored black by being blended with a carbon black and is improved in weather resistance such as UV resistance as a result of the coloring. However, blending of a carbon black tends to result in a decrease in tracking resistance.

### Citation List

### Patent Literature

PTL 1: Japanese Patent Application Publication No. 2006-143958

### Summary of Invention

### Object of Invention

It is an object of the present invention to provide polyphenylene ether resin compositions and shaped articles thereof which are excellent in heat resistance and mechanical properties such as impact resistance, have a high degree of blackness and excellent weather resistance, and exhibit excellent tracking resistance.

### Summary of Invention

The present inventors carried out studies in order to achieve the above object. As a result, the present inventors have found that a polyphenylene ether resin composition including a carbon black can achieve improvements in tracking resistance as well as in impact resistance by being blended with an alkaline earth metal carbonate and/or sulfate at a specific proportion.

The present invention has been accomplished based on the above finding. The invention is summarized as follows.

A polyphenylene ether resin composition according to the first aspect includes 100 parts by weight of a resin component (A) based on a polyphenylene ether resin (a1), 0.01 to 5 parts by weight of a carbon black (B), and 0.1 to 20 parts by weight of an alkaline earth metal carbonate and/or sulfate (C), wherein the resin component (A) contains the polyphenylene ether resin (a1) in a content of not less than 50 wt% relative to the total amount of the resin component (A), and wherein the carbon black (B) has an average primary particle diameter of 5 to 30 nm and a DBP oil absorption amount of 20 to 60 cm³/100 g.

A polyphenylene ether resin composition according to the second aspect is the polyphenylene ether resin composition of the first aspect having the following properties:
a) the comparative tracking index (CTI) measured in accordance with IEC 60112 with a thickness of 3 mm is not less than 250 V;
b) the notched Charpy impact strength measured in accordance with ISO 179 at 23°C is not less than 7 kJ/m²;
c) the flame retardance measured in accordance with UL 94 with a thickness of 0.75 mm is V-0; and
d) the value L measured in accordance with JIS Z-8722 is not more than 10.

A polyphenylene ether resin composition according to the third aspect is the polyphenylene ether resin composition of the first aspect or the second aspect wherein the alkaline earth metal carbonate and/or sulfate (C) is calcium carbonate and/or barium sulfate.

A polyphenylene ether resin composition according to the fourth aspect is the polyphenylene ether resin composition of any of the first aspect to the third aspect wherein the resin component (A) includes the polyphenylene ether resin (a1) and a styrene resin (a2).

A polyphenylene ether resin composition according to the fifth aspect is the polyphenylene ether resin composition of any of the first aspect to the third aspect wherein the resin component (A) includes the polyphenylene ether resin (a1) at 85 to 100 wt% and a styrene resin (a2) at 0 to 15 wt%.

A polyphenylene ether resin composition according to the sixth aspect is the polyphenylene ether resin composition of any of the first aspect to the fifth aspect wherein the composition further includes 1 to 30 parts by weight of a phosphorus-containing flame retardant (D) with respect to 100 parts by weight of the resin component (A).

A polyphenylene ether resin composition according to the seventh aspect is the polyphenylene ether resin composition of any of the first aspect to the sixth aspect wherein the composition further includes 0.01 to 3 parts by weight of a flame retardant auxiliary (E) with respect to 100 parts by weight of the resin component (A).

A polyphenylene ether resin composition according to the eighth aspect is the polyphenylene ether resin composition of any of the first aspect to the seventh aspect wherein the composition further includes 1 to 20 parts by weight of an elastomer (F) with respect to 100 parts by weight of the resin component (A).

A polyphenylene ether resin composition according to the ninth aspect is the polyphenylene ether resin composition of any of the first aspect to the eighth aspect wherein the polyphenylene ether resin (a1) contains 0.1 to 5 wt% of a polyphenylene ether resin with a weight average molecular weight of not less than 500,000.

A use according to the tenth aspect is the use of the polyphenylene ether resin composition of any of the first aspect to the ninth aspect for a photovoltaic module connection structure.

A shaped article according to the eleventh aspect is produced by shaping the polyphenylene ether resin composition of any of the first aspect to the ninth aspect.

A junction box according to the twelfth aspect is produced by shaping the polyphenylene ether resin composition of any of the first aspect to the ninth aspect. Advantageous Effects of Invention

According to the present invention, polyphenylene ether resin compositions and shaped articles thereof are provided which are excellent in heat resistance and mechanical properties such as impact resistance, have a high degree of blackness and excellent weather resistance, and exhibit excellent tracking resistance.

By utilizing their excellent heat resistance, blackness, weather resistance, mechanical properties such as impact resistance, and tracking resistance, the polyphenylene ether resin compositions of the invention may be effectively used as materials for forming solar cell parts, in particular photovoltaic module connection structures such as junction boxes and connectors. However, the use of the inventive polyphenylene ether resin compositions is not limited to solar cell parts, and the inventive polyphenylene ether resin compositions are usable for various applications in a wide range of fields such as automobile parts, parts of electric devices, electronic devices and OA devices, and building parts.

### Description of Embodiments

Embodiments of the present invention will be described in detail below.

### [Polyphenylene ether resin compositions]

A polyphenylene ether resin composition according to the present invention includes 100 parts by weight of a resin component (A) based on a polyphenylene ether resin (a1), 0.01 to 5 parts by weight of a carbon black (B), and 0.1 to 20 parts by weight of an alkaline earth metal carbonate and/or sulfate (C).

### [Resin component (A)]

The resin component (A) in the present invention is based on a polyphenylene ether resin (a1). This component is composed of a polyphenylene ether resin (a1) alone or in combination with a supplemental resin blended in order to improve properties such as fluidity and shaping properties of the polyphenylene ether resin (a1). The supplemental resin is preferably a styrene resin (a2).

Here, the term "based on" means that the resin represents not less than 50 wt% of the entirety of the resin component.

### <Polyphenylene ether resin (a1)>

The polyphenylene ether resin (a1) used in the invention is a polymer which has a structural unit represented by General Formula (1) below in the main chain. The polymer may be a homopolymer or a copolymer. 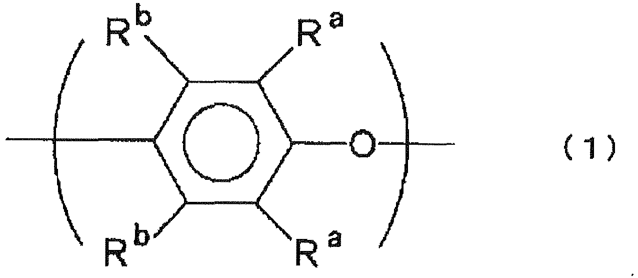
(In the formula, two R^{a}s are each independently a hydrogen atom, a halogen atom, a primary or secondary alkyl group, an aryl group, an aminoalkyl group, a haloalkyl group, a hydrocarbon oxy group or a halohydrocarbon oxy group; two R^{b}s are each independently a hydrogen atom, a halogen atom, a primary or secondary alkyl group, an aryl group, a haloalkyl group, a hydrocarbon oxy group or a halohydrocarbon oxy group; and two R^{a}s cannot be hydrogen atoms at the same time.)
R^{a}s and R^{b}s are each preferably any of a hydrogen atom, a primary or secondary alkyl group and an aryl group. Preferred examples of the primary alkyl groups include methyl group, ethyl group, n-propyl group, n-butyl group, n-amyl group, isoamyl group, 2-methylbutyl group, 2,3-dimethylbutyl group, and 2-, 3- or 4-methylpentyl group or heptyl group. Preferred examples of the secondary alkyl groups include isopropyl group, sec-butyl group and 1-ethylpropyl group. In particular, R^{a} is preferably a primary or secondary alkyl group having 1 to 4 carbon atoms, or a phenyl group, and R^{b} is preferably a hydrogen atom.

Preferred examples of the polyphenylene ether resins which are homopolymers include 2,6-dialkylphenylene ether polymers such as poly(2,6-dimethyl-1,4-phenylene ether), poly(2,6-diethyl-1,4-phenylene ether), poly(2,6-dipropyl-1,4-phenylene ether), poly(2-ethyl-6-methyl-1,4-phenylene ether) and poly(2-methyl-6-propyl-1,4-phenylene ether). Examples of the copolymers include 2,6-dialkylphenol/2,3,6-trialkylphenol copolymers such as 2,6-dimethylphenol/2,3,6-trimethylphenol copolymer, 2,6-dimethylphenol/2,3,6-triethylphenol copolymer, 2,6-diethylphenol/2,3,6-trimethylphenol copolymer and 2,6-dipropylphenol/2,3,6-trimethylphenol copolymer; graft copolymers obtained by graft polymerization of poly(2,6-dimethyl-1,4-phenylene ether) with styrene; and graft copolymers obtained by graft polymerization of 2,6-dimethylphenol/2,3,6-trimethylphenol copolymer with styrene.

In particular, the polyphenylene ether resin (a1) in the invention is preferably poly(2,6-dimethyl-1,4-phenylene ether) or 2,6-dimethylphenol/2,3,6-trimethylphenol random copolymer. Further, the polyphenylene ether resins described in Japanese Patent Application Publication No. 2005-344065 which have a specific number of terminal groups and a specific copper content are also suitably used.

The molecular weight of the polyphenylene ether resin (a1) is preferably such that the intrinsic viscosity measured in chloroform at 30°C is 0.2 to 0.8 dl/g, and more preferably 0.3 to 0.6 dl/g. When the intrinsic viscosity is not less than 0.2 dl/g, the obtainable resin composition tends to exhibit increased mechanical strength. When the intrinsic viscosity is not more than 0.8 dl/g, the obtainable composition tends to exhibit improved fluidity and to be shaped more easily. Two or more kinds of polyphenylene ether resins with different intrinsic viscosities may be used in combination so as to achieve the above intrinsic viscosity.

In order to ensure shaping properties and weather resistance, the polyphenylene ether resin (a1) used in the invention preferably contains 0.1 to 5 wt% of a high-molecular weight polyphenylene ether resin having a molecular weight of not less than 500,000, for example about 500,000 to 800,000. If the content of the high-molecular weight polyphenylene ether resin is less than 0.1 wt%, the effect in the improvement of weather resistance is small. Any content in excess of 5 wt% results in a decrease in shaping properties. The weight average molecular weight of the polyphenylene ether resin including such a high-molecular weight polyphenylene ether resin is preferably 40,000 to 100,000. If the weight average molecular weight of the polyphenylene ether resin is less than 40,000, properties such as chemical resistance are lowered. Any weight average molecular weight exceeding 100,000 results in a decrease in fluidity.

The molecular weight and the weight average molecular weight of the polyphenylene ether resin (a1) may be determined by a method described later in EXAMPLES.

The polyphenylene ether resin (a1) used in the invention may be produced by any known method without limitation. For example, a monomer such as 2,6-dimethylphenol may be oxidatively polymerized in the presence of a copper amine catalyst. The intrinsic viscosity and the molecular weight may be controlled to be within desired ranges by appropriately selecting reaction conditions during the polymerization. Controlling of the intrinsic viscosity and the molecular weight may be achieved by selecting conditions such as polymerization temperature, polymerization time and catalyst amount.

The aforementioned polyphenylene ether resin containing a high-molecular weight polyphenylene ether resin may be produced by mixing the polyphenylene ether resin with a predetermined amount of a polyphenylene ether resin preliminarily produced with a prescribed high molecular weight. Alternatively, part of the molecules of the polyphenylene ether resin may be bonded together to increase the molecular weight during melt-kneading for the production of the polyphenylene ether resin. The high-molecular weight polyphenylene ether resin may be a copolymer of the polyphenylene ether resin and a polystyrene resin described later. For example, such a high-molecular weight polyphenylene ether resin may be formed by melt-kneading the polyphenylene ether resin with a styrene resin, in which case the kneaded product contains the high-molecular weight polyphenylene ether resin.

In the present invention, the polyphenylene ether resins may be used singly, or two or more may be used in combination.

### <Styrene resin (a2)>

The styrene resin (a2) used in the invention may be a polymer of a styrene monomer, a copolymer of a styrene monomer and a copolymerizable monomer, or a styrene graft copolymer.

In more detail, examples of the styrene resins (a2) used in the invention include resins such as polystyrene (PS), high impact polystyrene (HIPS), acrylonitrile/styrene copolymer (AS resin), acrylonitrile/butadiene/styrene copolymer (ABS resin), methyl methacrylate/acrylonitrile/butadiene/styrene copolymer (MABS resin), acrylonitrile/acrylic rubber/styrene copolymer (AAS resin), acrylonitrile/ethylenepropylene rubber/styrene copolymer (AES resin) and styrene/IPN rubber copolymer; and mixtures of these resins. Stereoregular resins such as syndiotactic polystyrene may be usable. Of these, polystyrene (PS) and high impact polystyrene (HIPS) are preferable.

The weight average molecular weight of the styrene resin (a2) is usually not less than 50,000, preferably not less than 100,000, and more preferably not less than 150,000. The upper limit is usually 500,000 or less, preferably 400,000 or less, and more preferably 300,000 or less.

The styrene resin (a2) may be produced by any known method such as emulsion polymerization, solution polymerization, suspension polymerization or bulk polymerization.

In the present invention, the styrene resins may be used singly, or two or more may be used in combination.

### <Proportions>

The resin component (A) in the invention preferably includes the polyphenylene ether resin (a1) at 50 to 100 wt% and the styrene resin (a2) at 50 to 0 wt%, and more preferably includes the polyphenylene ether resin (a1) at 85 to 100 wt% and the styrene resin (a2) at 15 to 0 wt%. The proportion of the polyphenylene ether resin (a1) that is not less than 50 wt% ensures that good flame retardance, deflection temperature under load and mechanical strength are obtained. In particular, the proportion of the polyphenylene ether resin (a1) is preferably not less than 85 wt% when the resin composition is to be shaped into a thin product requiring high flame retardance.

In the polyphenylene ether resin composition of the invention, a resin other than the polyphenylene ether resin (a1) and the styrene resin (a2) may be used as part of the resin component while still achieving the advantageous effects of the invention. Examples of such other resins include thermoplastic resins such as polyamide resins, polyester resins, polyphenylene sulfide resins, liquid crystalline polyester resins, polycarbonate resins, polyacetal resins, polyacrylonitrile resins, acrylic resins, and olefin resins including polyethylene resins and polypropylene resins; and thermosetting resins such as epoxy resins, melamine resins and silicone resins. Two or more of these thermoplastic resins and thermosetting resins may be used in combination. The amount of these other resins is preferably not more than 50 wt%, more preferably not more than 30 wt%, and particularly preferably not more than 10 wt% relative to the resin component (A).

### [Carbon black (B)]

The carbon black (B) is added in order to give a black color to the inventive polyphenylene ether resin composition and to increase weather resistance.

The carbon black (B) has an average primary particle diameter of 5 to 30 nm and a DBP oil absorption amount of 20 to 60 cm³/100 g. The carbon black (B) preferably has an average primary particle diameter of 10 to 25 nm, and more preferably 10 to 20 nm, and a DBP oil absorption amount of 40 to 60 cm³/100 g.

When the particle diameter of the carbon black is not more than the above upper limit, the obtainable composition tends to have good blackness with a small value L described later, exhibit excellent shaping properties and mechanical properties, and be easily suppressed from a decrease in tracking resistance. When the particle diameter is not less than the above lower limit, tracking resistance tends to be improved and good dischargeability tends to be obtained during melt-kneading.

When the DBP oil absorption amount of the carbon black is not more than the above upper limit, good tracking resistance tends to be obtained. When the DBP oil absorption amount is not less than the above lower limit, the value L tends to be small and good blackness tends to be obtained.

By appropriately selecting the carbon black having an appropriate average primary particle diameter and an appropriate DBP oil absorption amount, the obtainable polyphenylene ether resin composition achieves a small value L and high tracking resistance with a good balance.

The average primary particle diameter of the carbon black is obtained in accordance with ASTM D3849 (Standard Test Method for Carbon Black-Morphological Characterization of Carbon Black Using Electron Microscopy) by acquiring an enlarged image of aggregates, analyzing the aggregate image to measure the diameter of 3,000 particles as unit particles constituting the aggregates, and arithmetically averaging the particle diameters. The DBP oil absorption amount is measured in accordance with JIS K6217.

The carbon black (B) may be a single carbon black or a combination of two or more kinds of carbon blacks having different average primary particle diameters or DBP oil absorption amounts.

The content of the carbon black (B) in the inventive polyphenylene ether resin composition is 0.01 to 5 parts by weight, preferably 0.1 to 3 parts by weight, and more preferably 0.2 to 1 part by weight with respect to 100 parts by weight of the resin component (A). Blackness and weather resistance can be increased by adding the carbon black (B) such that the content thereof becomes not less than the above lower limit. The above upper limit ensures that a decrease in tracking resistance is suppressed and a decrease in shaping properties and mechanical properties is prevented.

### [Alkaline earth metal carbonate and/or sulfate (C)]

The alkaline earth metal carbonate and/or sulfate (hereinafter, the alkaline earth metal carbonate and/or sulfate will be sometimes referred to as "component (C)") is added in order to improve tracking resistance. In the present invention, the addition of the component (C) ensures that tracking resistance is improved without a substantial decrease in impact resistance with the result that the obtainable resin composition achieves an excellent balance between tracking resistance and impact resistance.

The alkaline earth metal in the component (C) is at least one element in Group IIa in the periodic table. Calcium, barium, strontium and magnesium are preferable, and calcium and barium are more preferable.

In particular, from the viewpoints of the effects in the improvements of tracking resistance and impact resistance as well as the retention of the degree of blackness, calcium carbonate and barium sulfate are preferable as the alkaline earth metal carbonate and/or sulfate, namely, as the component (C).

The average particle diameter of the component (C) is not particularly limited. A commercial product having an average particle diameter of about 0.05 to 3 µm may be used. A preferred average particle diameter is 0.05 to 1 µm. The use of calcium carbonate having a large particle diameter can result in problems such as a decrease in impact resistance, clouding of shaped articles, and unevenness on the surface of shaped articles. In order to prevent the occurrence of such problems, it is preferable that the average particle diameter of calcium carbonate be not more than 0.5 µm, for example, 0.05 to 0.5 µm. The average particle diameter of the component (C) is an arithmetic average particle diameter obtained by microscopic observation of the particles.

The components (C) may be used singly, or two or more may be used in combination.

The content of the component (C) in the inventive polyphenylene ether resin composition is 0.1 to 20 parts by weight, preferably 0.5 to 15 parts by weight, and more preferably 1 to 12 parts by weight with respect to 100 parts by weight of the resin component (A). Tracking resistance and impact resistance can be increased sufficiently by adding the component (C) such that the content thereof becomes not less than the above lower limit. The above upper limit ensures that a decrease in the degree of blackness is suppressed.

### [Phosphorus-containing flame retardant (D)]

The polyphenylene ether resin composition of the invention may contain a flame retardant to achieve flame retardance. The flame retardant is not particularly limited as long as it can improve the flame retardance of the composition. Examples thereof include silicone compounds such as polyorganosiloxanes having a linear or branched structure; metal organosulfonates such as sodium perfluorobutane-sulfonate, potassium perfluorobutane-sulfonate, sodium perfluoromethylbutane-sulfonate, potassium perfluoromethylbutane-sulfonate, sodium perfluorooctane-sulfonate, potassium perfluorooctane-sulfonate and tetraethylammonium perfluorobutane-sulfonate, as well as sodium 3,4-dichlorobenzenesulfonate, sodium 2,4,5-trichlorobenzenesulfonate, sodium benzenesulfonate, sodium diphenylsulfone-3-sulfonate, potassium diphenylsulfone-3-sulfonate, sodium 4,4'-dibromodiphenyl-sulfone-3-sulfonate, potassium 4,4'-dibromodiphenyl-sulfone-3-sulfonate, calcium 4-chloro-4'-nitrodiphenylsulfone-3-sulfonate, disodium diphenylsulfone-3,3'-disulfonate and dipotassium diphenylsulfone-3,3'-disulfonate; and phosphorus-containing flame retardants (D). In particular, phosphorus-containing flame retardants (D) are preferable.

The phosphorus-containing flame retardant (D) is not particularly limited as long as it can improve the flame retardance of the composition. A phosphate compound is suitable.

For example, the phosphate compound which may be used in the invention is represented by Formula (2) below: 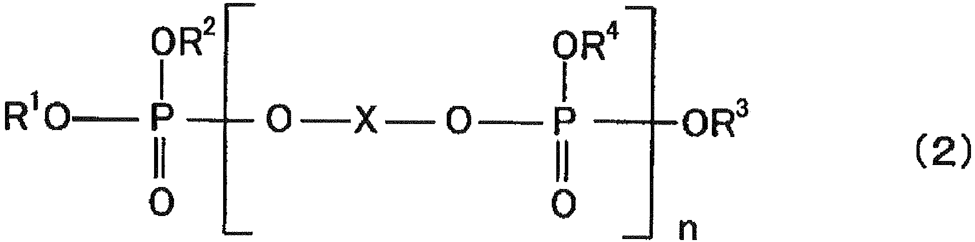 In the formula, R¹, R², R³ and R⁴ are each independently an optionally substituted aryl group, X is an optionally substituted divalent aromatic group, and n is a number of 0 to 5.

Examples of the aryl groups indicated by R¹ to R⁴ in General Formula (2) include phenyl group and naphthyl group. Examples of the divalent aromatic groups indicated by X include phenylene group, naphthylene group and groups derived from, for example, bisphenol. Exemplary substituents to these groups include alkyl groups, alkoxyl groups and hydroxyl group. The compound is a phosphate when n is 0, and is a condensed phosphate (which may be a mixture) when n is greater than 0.

Specific examples of such phosphate compounds include bisphenol A bisphosphate, hydroquinone bisphosphate, resorcinol bisphosphate, and substituted compounds and condensates of these compounds.

Commercial condensed phosphate compounds are suitably used as such components. For example, such compounds are easily available and sold under the trade names of "CR733S" (resorcinol bis(diphenyl phosphate)) and "CR741" (bisphenol A bis(diphenyl phosphate)) from DAIHACHI CHEMICAL INDUSTRY CO., LTD., and "FP500" (resorcinol bis(dixylenyl phosphate)) from ADEKA. In particular, CR733S is preferable because of its low gas nature.

When the flame retardant such as the phosphorus-containing flame retardant (D) is added to the inventive polyphenylene ether resin composition, the content thereof is preferably 1 to 30 parts by weight, more preferably 3 to 20 parts by weight, and particularly preferably 9 to 20 parts by weight with respect to 100 parts by weight of the resin component (A). A sufficient effect in the improvement of flame retardance can be obtained by adding the flame retardant such as the phosphorus-containing flame retardant (D) such that the content thereof becomes not less than the above lower limit. The above upper limit ensures that a decrease in heat resistance by the addition of the flame retardant such as the phosphorus-containing flame retardant (D) is suppressed.

### [Flame retardant auxiliary (E)]

In order to further improve flame retardance, one, or two or more kinds of flame retardant auxiliaries (E) may be added to the polyphenylene ether resin composition of the invention. Fluororesins, in particular polyfluoroethylenes, are preferable as the flame retardant auxiliaries (E). Of the polyfluoroethylenes, those which have a capability of forming fibrils by exhibiting a tendency of being easily dispersed in the resin component and bonding resin molecules into a fibrous material are preferable.

In order to improve the appearance of shaped articles produced by melt-shaping the resin composition containing a polyfluoroethylene, it is preferable to use a coated polyfluoroethylene coated with an organic polymer. This coated polyfluoroethylene is preferably such that the polyfluoroethylene content in the coated polyfluoroethylene is 40 to 95 wt%, more preferably 43 to 80 wt%, still more preferably 45 to 70 wt%, and particularly preferably 47 to 60 wt%.

The addition of such a coated polyfluoroethylene suppresses the occurrence of white foreign matters on the surface of shaped articles while maintaining good flame retardance. When the polyfluoroethylene content in the coated polyfluoroethylene is not less than the above lower limit, an excellent effect is obtained in the improvement of flame retardance. The above upper limit ensures that the occurrence of white foreign matters tends to be reduced easily.

The polyfluoroethylene to be coated with an organic polymer is preferably polytetrafluoroethylene (PTFE), in particular one which has a capability of forming fibrils so that the polytetrafluoroethylene is easily dispersed in the polymer and exhibits a tendency of bonding polymer molecules into a fibrous material.

Such a coated polyfluoroethylene may be produced by any of various known methods. Exemplary methods include a method (1) in which an aqueous dispersion of polyfluoroethylene particles and an aqueous dispersion of organic polymer particles are mixed with each other, and powder is produced by solidifying or spray drying the mixture; a method (2) in which a monomer for an organic polymer is polymerized in the presence of an aqueous dispersion of polyfluoroethylene particles, and powder is produced by solidifying or spray drying the polymerization liquid; and a method (3) in which an aqueous dispersion of polyfluoroethylene particles and an aqueous dispersion of organic polymer particles are mixed with each other, a monomer having an ethylenically unsaturated bond is emulsion polymerized in the mixed dispersion, and powder is produced by solidifying or spray drying the polymerization liquid.

The organic polymer to coat the polyfluoroethylene is not particularly limited. From the viewpoint of dispersibility when the polymer is added to the resin, an organic polymer exhibiting a high affinity for the polyphenylene ether resin (a1) is preferable.

Specific examples of monomers for forming the organic polymer include aromatic vinyl monomers such as styrene, α-methylstyrene, p-methylstyrene, o-methylstyrene, t-butylstyrene, o-ethylstyrene, p-chlorostyrene, o-chlorostyrene, 2,4-dichlorostyrene, p-methoxystyrene, o-methoxystyrene and 2,4-dimethylstyrene; (meth)acrylate monomers such as methyl acrylate, methyl methacrylate, ethyl acrylate, ethyl methacrylate, butyl acrylate, butyl methacrylate, 2-ethylhexyl acrylate, 2-ethylhexyl methacrylate, dodecyl acrylate, dodecyl methacrylate, tridecyl acrylate, tridecyl methacrylate, octadecyl acrylate, octadecyl methacrylate, cyclohexyl acrylate and cyclohexyl methacrylate; vinyl cyanide monomers such as acrylonitrile and methacrylonitrile; α,β-unsaturated carboxylic acids such as maleic acid anhydride; maleimide monomers such as N-phenylmaleimide, N-methylmaleimide and N-cyclohexylmaleimide; glycidyl group-containing monomers such as glycidyl methacrylate; vinyl ether monomers such as vinyl methyl ether and vinyl ethyl ether; vinyl carboxylate monomers such as vinyl acetate and vinyl butyrate; olefin monomers such as ethylene, propylene and isobutylene; and diene monomers such as butadiene, isoprene and dimethylbutadiene. These monomers may be used singly, or two or more may be used in combination.

Of these monomers, one or more monomers selected from aromatic vinyl monomers, (meth)acrylate monomers and vinyl cyanide monomers are preferable from the viewpoint of the affinity for the polyphenylene ether resin (a1). In particular, a (meth)acrylate monomer is preferable. Monomers including these monomers at not less than 10 wt% are preferable.

Examples of the coated polyfluoroethylenes suitably used in the invention include METABLEN A-3800 and KA-5503 manufactured by Mitsubishi Rayon Co., Ltd., and Poly TS AD001 manufactured by PIC.

When the inventive polyphenylene ether resin composition contains the flame retardant auxiliary (E), the content thereof is preferably 0.01 to 3 parts by weight, more preferably 0.05 to 1 part by weight, and particularly preferably 0.1 to 0.7 parts by weight with respect to 100 parts by weight of the resin component (A). A sufficient effect in the improvement of flame retardance can be obtained when the content of the flame retardant auxiliary (E) is not less than the above lower limit. The above upper limit ensures that a decrease in the appearance of shaped articles tends to be prevented easily.

In the inventive polyphenylene ether resin composition, the blend ratio of the flame retardant such as the phosphorus-containing flame retardant (D) to the flame retardant auxiliary (E) (flame retardant such as phosphorus-containing flame retardant (D)/flame retardant auxiliary (E) weight ratio) is usually 0.1 to 1000, further 1 to 100, and particularly 2 to 60 in order for the resin composition to exhibit well-balanced properties.

### [Elastomer (F)]

In the present invention, one, or two or more kinds of elastomers (F) may be added mainly in order to improve the impact resistance of the resin composition.

The elastomer (F) may be at least one elastomer selected from the group consisting of olefin polymers, olefin-vinyl copolymers, and block copolymers including a vinyl aromatic compound polymer block a and a conjugated diene compound polymer block b as well as hydrogenated products thereof.

These elastomers may be produced by any of known production methods. The elastomer preferably has a glass transition temperature of not more than 0°C, and more preferably not more than -5°C. The use of an elastomer with a glass transition temperature of not more than 0°C allows for good impact resistance at a low temperature.

### <Olefin polymers>

The olefin polymers used as the elastomers are preferably homopolymers or copolymers obtained by polymerizing olefin monomers having 2 to 20 carbon atoms.

Examples of the olefin monomers include ethylene, propylene, 1-butene, 1-hexene, 1-octene, 1-decene, 3-methylbutene-1 and 4-methylpentene-1. Two or more of these monomers may be used in combination. Of these, linear olefin monomers having 2 to 10 carbon atoms are more preferable, and ethylene, propylene and 1-butene are still more preferable.

Examples of the olefin copolymers include ethylene-propylene copolymer (EPR) and ethylene-butene copolymer (EBR).

These olefin polymers may be used singly, or two or more may be used in combination.

### <Olefin-vinyl copolymers>

The olefin-vinyl copolymers used as the elastomers are copolymers obtained by polymerizing an olefin monomer and a vinyl monomer.

Examples of the olefin monomers used herein include the same monomers as used in the above <Olefin polymers>.

Examples of the vinyl monomers include unsaturated glycidyl group-containing compounds such as glycidyl acrylate, glycidyl methacrylate and monoglycidyl itaconate; unsaturated carboxylic acids such as acrylic acid, methacrylic acid, fumaric acid, maleic acid anhydride, itaconic acid, itaconic acid anhydride and bicyclo(2,2,1)-5-heptene-2,3-dicarboxylic acid, and metal salts thereof; unsaturated carboxylate compounds such as (meth)acrylates of alkyls with 1 to 20 carbon atoms including methyl acrylate, ethyl acrylate, n-butyl acrylate, isobutyl acrylate, t-butyl acrylate, 2-ethylhexyl acrylate, methyl methacrylate, ethyl methacrylate, n-butyl methacrylate and isobutyl methacrylate; vinyl ester compounds such as vinyl acetate, vinyl propionate, vinyl caproate, vinyl caprylate, vinyl laurate, vinyl stearate and vinyl trialkylacetate; and vinyl aromatic compounds such as styrene, methylstyrene, dimethylstyrene, ethylstyrene, isopropylstyrene, chlorostyrene, α-methylstyrene and α-ethylstyrene. Of these, unsaturated glycidyl group-containing compounds and unsaturated carboxylic acids are preferable.

Two or more kinds of the above olefin monomers and vinyl monomers may be use in combination.

Specific examples of the olefin-vinyl copolymers include ethylene-glycidyl methacrylate copolymer, ethylene-propylene-glycidyl methacrylate copolymer, ethylene-vinyl acetate-glycidyl methacrylate copolymer, ethylene-ethyl acrylate-glycidyl methacrylate copolymer, ethylene-glycidyl acrylate copolymer, ethylene-vinyl acetate-glycidyl acrylate copolymer, propylene-g-glycidyl methacrylate copolymer, ethylene-glycidyl acrylate-g-polymethyl methacrylate copolymer, ethylene-glycidyl acrylate-g-polystyrene copolymer, ethylene-glycidyl acrylate-g-polyacrylonitrile-styrene copolymer, ethylene-acrylic acid copolymer, ethylene-methyl methacrylate copolymer, ethylene-g-acrylic acid copolymer, ethylene-ethyl acrylate-g-polymethyl methacrylate copolymer, ethylene-vinyl acetate-g-polystyrene copolymer, ethylene-glycidyl methacrylate-g-polyacrylic acid copolymer and ethylene-glycidyl methacrylate-g-polymethyl methacrylate copolymer (wherein "-g-" indicates graft copolymerization and the same applies hereinafter). Of these, ethylene-glycidyl methacrylate copolymer and propylene-g-glycidyl methacrylate copolymer are preferable in view of toughness.

Two or more kinds of these olefin-vinyl copolymers may be used in combination.

### <Block copolymers including vinyl aromatic compound polymer block a and conjugated diene compound polymer block b, and hydrogenated products thereof (hereinafter, sometimes abbreviated to "block copolymers and hydrogenated products thereof")>

The block copolymers used as the elastomers are elastomers which are different from the aforementioned styrene resins and include a vinyl aromatic compound polymer block a and a conjugated diene compound polymer block b. The hydrogenated products of the block copolymers are block copolymers obtained by hydrogenating the above block copolymers with the result that the number of aliphatic unsaturated groups in the blocks b has been decreased. The arrangement of the blocks a and the blocks b may form any structure such as a linear structure or a branched structure. Further, a portion of the structure may include a random chain derived from a random copolymer of the vinyl aromatic compound and the conjugated diene compound. Of these structures, a linear structure is preferable, and an a-b-a triblock structure is more preferable. Such an a-b-a block copolymer may include an a-b diblock structure. Two or more kinds of these block copolymers and hydrogenated products thereof may be used in combination.

Preferred examples of the vinyl aromatic compounds forming the vinyl aromatic compound polymer blocks a include styrene, α-methylstyrene, vinyltoluene and vinylxylene, with styrene being more preferable. Preferred examples of the conjugated diene compounds forming the conjugated diene compound blocks b include 1,3-butadiene and 2-methyl-1,3-butadiene.

In the block copolymers and the hydrogenated products thereof, the proportion of repeating units derived from the vinyl aromatic compound is preferably in the range of 10 to 70 wt%, more preferably 10 to 40 wt%, and still more preferably 15 to 25 wt%. If the proportion is less than 10 wt%, heat stability is lowered and the resin composition is susceptible to oxidative degradation during its preparation and shaping. Any proportion in excess of 70 wt% tends to result in a decrease in impact resistance.

Of the aliphatic chains in the hydrogenated products of the block copolymers, the proportion of unsaturated bonds derived from the conjugated diene compound and remaining unhydrogenated is preferably not more than 20 wt%, and more preferably not more than 10 wt%. The aromatic unsaturated bonds derived from the vinyl aromatic compound may be hydrogenated. However, the proportion of the aromatic unsaturated bonds that are hydrogenated is preferably not more than 25 wt%.

The block copolymers and the hydrogenated products thereof are easily available from the market. Various kinds of a-b-a triblock copolymers are sold on the market, with examples including styrene-butadiene-styrene copolymer (SBS) in which the monomer for the vinyl aromatic compound polymer blocks a is styrene and the conjugated diene compound monomer for the conjugated diene compound polymer blocks b is 1,3-butadiene, styrene-ethylene-butylene-styrene copolymer (SEBS) which is a hydrogenated product of SBS, and styrene-ethylene-propylene-styrene copolymer (SEPS) in which the conjugated diene compound is 2-methyl-1,3-butadiene.

The number average molecular weight of the block copolymers and the hydrogenated products thereof is preferably in the range of 50,000 to 300,000. By controlling the number average molecular weight to be not less than 50,000, the final resin composition achieves excellent impact resistance and dimensional stability and can give shaped articles with a good appearance. By controlling the number average molecular weight to be not more than 300,000, the final resin composition maintains fluidity and is shaped easily. The number average molecular weight is more preferably in the range of 55,000 to 250,000, and particularly preferably 55,000 to 220,000.

In the present invention, the above elastomers may be used after being modified with a modifier or with a combination of a radical generator and a modifier.

Unsaturated carboxylic acids, unsaturated carboxylic acid anhydrides and derivatives thereof may be used as the modifiers, with examples including maleic acid (anhydride), itaconic acid (anhydride), chloromaleic acid (anhydride), citraconic acid (anhydride), butenylsuccinic acid (anhydride), tetrahydrophthalic acid (anhydride), and acid halides, amides and imides of these acid compounds as well as esters of these acid compounds with alkyls or glycols with 1 to 20 carbon atoms, such as maleimide, monomethyl maleate and dimethyl maleate. Here, the term "(anhydride)" indicates that the acid is an unsaturated carboxylic acid anhydride or an unsaturated carboxylic acid. Of these, unsaturated dicarboxylic acids and acid anhydrides thereof are preferable, and maleic acid (anhydride) and itaconic acid (anhydride) are more preferable. Two or more kinds of these unsaturated carboxylic acids, unsaturated carboxylic acid anhydrides and derivatives thereof may be used in combination.

Examples of the radical generators include organic peroxides and azo compounds.

Specific examples of the organic peroxides include hydroperoxides such as t-butyl hydroperoxide, cumene hydroperoxide, 2,5-dimethylhexane-2,5-dihydroperoxide, 1,1,3,3-tetramethylbutyl hydroperoxide, p-menthane hydroperoxide and diisopropylbenzene hydroperoxide; dialkyl peroxides such as 2,5-dimethyl-2,5-di(t-butylperoxy)hexyne-3, di-t-butyl peroxide, t-butylcumyl peroxide, 2,5-dimethyl-2,5-di(t-butylperoxy)hexane and dicumyl peroxide; peroxyketals such as 2,2-bis-t-butylperoxybutane, 2,2-bis-t-butylperoxyoctane, 1,1-bis-t-butylperoxycyclohexane and 1,1-bis-t-butylperoxy-3,3,5-trimethylcyclohexane; peroxy esters such as di-t-butyl peroxyisophthalate, t-butyl peroxybenzoate, t-butyl peroxyacetate, 2,5-dimethyl-2,5-dibenzoyl peroxyhexane, t-butyl peroxyisopropylcarbonate and t-butyl peroxyisobutyrate; and diacyl peroxides such as benzoyl peroxide, m-toluoyl peroxide, acetyl peroxide and lauroyl peroxide.

Specific examples of the azo compounds include 2,2'-azobisisobutyronitrile, 2,2'-azobis(2-methylbutyronitrile), 1,1'-azobis(cyclohexane-1-carbonitrile), 1-[(1-cyano-1-methylethyl)azo]formamide, 2-phenylazo-4-methoxy-2,4-dimethylvaleronitrile, 2,2'-azobis(2,4,4-trimethylpentane) and 2,2'-azobis(2-methylpropane).

Of these radical generators, those having a 10 hour half-life temperature of not less than 120°C are particularly preferable from the viewpoints of dimensional stability and impact resistance.

Further, methyl methacrylate-butadiene-styrene copolymers (MBS) also may be preferably used as the elastomers. MBS is obtained by graft polymerizing a methacrylate component and an aromatic vinyl component and further optionally a vinyl cyanide component to a diene rubber, for example, a butadiene polymer such as polybutadiene or butadiene-styrene copolymer by a method such as bulk polymerization, suspension polymerization, bulk suspension polymerization, solution polymerization or emulsion polymerization. In particular, such a graft copolymer obtained by emulsion polymerization is preferable. The amount of the butadiene polymer used is usually 10 to 85 wt%, and preferably 30 to 70 wt%. The proportion of the butadiene component in the butadiene polymer is preferably not less than 50 wt%. Using the butadiene polymer in an amount of less than 10 wt% is not preferable because shaped articles obtained from the resin composition are poor in impact resistance. If the amount exceeds 85 wt%, the shaping properties of the resin composition are lowered.

Examples of the methacrylate as a constituent of MBS include esters of alkyls having 1 to 4 carbon atoms. In particular, methyl methacrylate is preferable. Examples of the aromatic vinyl include styrene, halogenated styrenes, vinyl toluene, α-methylstyrene and vinylnaphthalene, with styrene being particularly preferable. Examples of the vinyl cyanide compound include acrylonitrile, methacrylonitrile and α-halogenated acrylonitriles, with acrylonitrile being particularly preferable.

Further, MBS contains a phenolic heat stabilizer and a thioether heat stabilizer in a total amount of 0.1 to 4 parts by weight, and preferably 0.5 to 3 parts by weight with respect to 100 parts by weight of MBS as well as at a weight ratio of the phenolic heat stabilizer to the thioether heat stabilizer ranging from 1/0 to 1/1. If the proportion of the thioether heat stabilizer surpasses the proportion of the phenolic heat stabilizer in MBS, thermal coloration resistance and thermal degradation resistance are lowered.

A preferred phenolic heat stabilizer to be added to MBS is a hindered phenol compound with a molecular weight of not less than 500 in which the property of the OH group in the phenolic compound is hindered. In particular, preferred compounds are n-octadecyl-3-(3',5'-di-tertiary-butyl-4'-hydroxyphenyl) propionate and triethylene glycol-bis[3-(3'-tertiary-butyl-5-methyl-4-hydroxyphenyl) propionate].

Preferred examples of the thioether heat stabilizers to be added to MBS include dialkyl-3,3'-thiodipropionate, tetrakis[methylene-3(alkylthio)propionate]methane and bis[2-methyl-4(3-alkyl-thiopropionyloxy)-5-tertiary-butylphenyl]sulfide.

In the case where MBS is produced by emulsion polymerization so as to contain the phenolic heat stabilizer and the thioether heat stabilizer in the specific amounts and the specific ratio, these heat stabilizers may be dispersed in the emulsion simultaneously or separately from each other, may be added at the completion of the polymerization, or may be added during a solidification, dehydration or drying step.

When the polyphenylene ether resin composition of the invention contains the elastomer (F) described above, the content thereof is preferably 1 to 20 parts by weight, more preferably 1 to 15 parts by weight, still more preferably 1.5 to 10 parts by weight, and particularly preferably 2 to 7 parts by weight with respect to 100 parts by weight of the resin component (A). When the content of the elastomer is not less than the above lower limit, the obtainable resin composition tends to exhibit excellent impact resistance. The above upper limit ensures that decreases in flame retardance, deflection temperature under load and hardness tend to be prevented easily.

### [Other additives]

The polyphenylene ether resin composition of the invention may contain various resin additives in addition to the aforementioned components.

### <Mold release agents>

The inventive polyphenylene ether resin composition preferably contains a mold release agent in order to improve mold releasability. Examples of the mold release agents include polyolefin waxes, aliphatic carboxylic acids, aliphatic carboxylates and silicone oils. Of these, polyolefin waxes are preferable.

Examples of the aliphatic carboxylic acids include saturated or unsaturated aliphatic monocarboxylic acids, dicarboxylic acids and tricarboxylic acids. Here, the term "aliphatic carboxylic acids" includes alicyclic carboxylic acids. Of these aliphatic carboxylic acids, mono- or dicarboxylic acids having 6 to 36 carbon atoms are preferable, and aliphatic saturated monocarboxylic acids having 6 to 36 carbon atoms are more preferable. Specific examples of such aliphatic carboxylic acids include palmitic acid, stearic acid, valeric acid, caproic acid, capric acid, lauric acid, arachic acid, behenic acid, lignoceric acid, cerotic acid, melissic acid, tetratriacontanoic acid, montanic acid, glutaric acid, adipic acid and azelaic acid.

Examples of the aliphatic carboxylic acid components for constituting the aliphatic carboxylates include the aforementioned aliphatic carboxylic acids. Examples of the alcohol components for constituting the aliphatic carboxylates include saturated or unsaturated monohydric alcohols, and saturated or unsaturated polyhydric alcohols. These alcohols may have a substituent such as a fluorine atom or an aryl group. Of these alcohols, monohydric or polyhydric, saturated alcohols having 30 or less carbon atoms are preferable, and aliphatic saturated monohydric alcohols or polyhydric alcohols having 30 or less carbon atoms are more preferable. Here, the term "aliphatic alcohols" includes alicyclic alcohols.

Specific examples of the alcohols include octanol, decanol, dodecanol, stearyl alcohol, behenyl alcohol, ethylene glycol, diethylene glycol, glycerol, pentaerythritol, 2,2-dihydroxyperfluoropropanol, neopentylene glycol, ditrimethylolpropane and dipentaerythritol. The aliphatic carboxylate from the above components may contain the aliphatic carboxylic acid and/or the alcohol as impurities, or may be a mixture of a plurality of compounds.

Specific examples of the aliphatic carboxylates include beeswax (a mixture based on myristyl palmitate), stearyl stearate, behenyl behenate, octyldodecyl behenate, glycerin monopalmitate, glycerin monostearate, glycerin distearate, glycerin tristearate, pentaerythritol monopalmitate, pentaerythritol monostearate, pentaerythritol distearate, pentaerythritol tristearate and pentaerythritol tetrastearate.

Examples of the polyolefin waxes include olefin homopolymers and copolymers. Examples of the olefin homopolymers include polyethylene waxes, polypropylene waxes, partial oxides thereof and mixtures thereof. Examples of the olefin copolymers include copolymers of α-olefins such as ethylene, propylene, 1-butene, 1-hexene, 1-decene, 2-methylbutene-1, 3-methylbutene-1, 3-methylpentene-1 and 4-methylpentene-1; and copolymers of these olefins and monomers copolymerizable therewith, for example, polymerizable monomers such as unsaturated carboxylic acids and acid anhydrides thereof (e.g., maleic acid anhydride, (meth)acrylic acid) and (meth)acrylates (e.g., esters of (meth)acrylic acid with an alkyl having 1 to 6 carbon atoms such as methyl (meth)acrylate and ethyl (meth)acrylate). These copolymers may be random copolymers, block copolymers or graft copolymers. The olefin copolymer is usually a copolymer of ethylene and at least one monomer selected from other olefins and polymerizable monomers. Of these polyolefin waxes, polyethylene waxes are most preferable. The structure of the polyolefin waxes may be a linear or branched structure.

The mold release agents may be used singly, or two or more may be used in combination.

When the polyphenylene ether resin composition of the invention contains the mold release agent, the content thereof is preferably 0.1 to 3 parts by weight, more preferably 0.15 to 2.5 parts by weight, and particularly preferably 0.2 to 2 parts by weight with respect to 100 parts by weight of the resin component (A). When the content of the mold release agent is not less than the above lower limit, a sufficient mold release effect can be obtained. The above upper limit ensures that a decrease in heat resistance as well as the occurrence of problems such as mold contamination and insufficient plasticization tend to be prevented easily.

### <Heat stabilizers>

At least one heat stabilizer selected from hindered phenol compounds, phosphite compounds, phosphonite compounds and zinc oxide may be added to the inventive polyphenylene ether resin composition in order to improve heat stability during the production of the composition, during melt-kneading in a shaping step, or during use.

Specific examples of the hindered phenol compounds include n-octadecyl-3-(3',5'-di-t-butyl-4'-hydroxyphenyl) propionate, 1,6-hexanediol-bis[3-(3',5'-di-t-butyl-4'-hydroxyphenyl) propionate], pentaerythritol-tetrakis[3-(3',5'-di-t-butyl-4'-hydroxyphenyl) propionate], 2,6-di-t-butyl-4-methylphenol, 3,9-bis[1,1-dimethyl-2-{β-(3-t-butyl-4-hydroxy-5-methylphenyl)propionyloxy}ethyl]-2,4,8,10-tetraoxaspiro[5,5]undecane, triethylene glycol-bis[3-(3-t-butyl-5-methyl-4-hydroxyphenyl) propionate], diethyl 3,5-dit-butyl-4-hydroxybenzylphosphonate, 1,3,5-trimethyl-2,4,6-tris(3',5'-di-t-butyl-4'-hydroxybenzyl)benzene, 2,2-thio-diethylenebis[3-(3',5'-di-t-butyl-4'-hydroxyphenyl) propionate], tris(3,5-di-t-butyl-4-hydroxybenzyl)-isocyanurate and N,N'-hexamethylenebis(3,5-di-t-butyl-4-hydroxy-hydrocinnamide. Of these, n-octadecyl-3-(3',5'-dit-butyl-4'-hydroxyphenyl) propionate, 1,6-hexanediol-bis[3-(3',5'-t-butyl-4'-hydroxyphenyl) propionate], 2,6-di-t-butyl-4-methylphenol and 3,9-bis[1,1-dimethyl-2-{β-(3-t-butyl-4-hydroxy-5-methylphenyl)propionyloxy}ethyl]-2,4,8,10-tetraoxaspiro[5,5]undecane are preferable. These compounds may be used singly, or two or more may be used in combination.

Specific examples of the phosphite compounds include tris(2,4-di-t-butylphenyl) phosphite, bis(2,4-di-t-butylphenyl)pentaerythritol-di-phosphite, bis(2,6-di-t-butyl-4-methylphenyl)pentaerythritol-di-phosphite, 2,2-methylenebis(4,6-di-t-butylphenyl)octyl phosphite, 4,4'-butylidene-bis-(3-methyl-6-t-butylphenyl-di-tridecyl) phosphite, 1,1,3-tris(2-methyl-4-di-tridecyl phosphito-5-t-butyl-phenyl)butane, tris(mixed mono- and di-nonylphenyl) phosphite, tris(nonylphenyl) phosphite and 4,4'-isopropylidenebis(phenyl-dialkyl phosphite). Of these, preferable compounds include tris(2,4-di-t-butylphenyl) phosphite, 2,2-methylenebis(4,6-di-t-butylphenyl)octyl phosphite and bis(2,6-di-t-butyl-4-methylphenyl)pentaerythritol-di-phosphite. These compounds may be used singly, or two or more may be used in combination.

Specific examples of the phosphonite compounds include tetrakis(2,4-di-t-butylphenyl)-4,4'-biphenylene diphosphonite, tetrakis(2,5-di-t-butylphenyl)-4,4'-biphenylene diphosphonite, tetrakis(2,3,4-trimethylphenyl)-4,4'-biphenylene diphosphonite, tetrakis(2,3-dimethyl-5-ethylphenyl)-4,4'-biphenylene diphosphonite, tetrakis(2,6-di-t-butyl-5-ethylphenyl)-4,4'-biphenylene diphosphonite, tetrakis(2,3,4-tributylphenyl)-4,4'-biphenylene diphosphonite and tetrakis(2,4,6-tri-t-butylphenyl)-4,4'-biphenylene diphosphonite, with tetrakis(2,4-di-t-butylphenyl)-4,4'-biphenylene diphosphonite being preferable.

The zinc oxide preferably has an average particle diameter of 0.02 to 1 µm, and more preferably an average particle diameter of 0.08 to 0.8 µm.

When the polyphenylene ether resin composition of the invention contains the heat stabilizer, the content thereof is usually 0.01 to 5 parts by weight, preferably 0.03 to 3 parts by weight, and more preferably 0.05 to 2 parts by weight with respect to 100 parts by weight of the resin component (A). When the content of the heat stabilizer is not less than the above lower limit, a sufficient effect in the improvement of heat stability can be obtained. The above upper limit ensures that problems such as the occurrence of mold contamination and a decrease in mechanical strength are prevented.

### <Fillers>

In the invention, one, or two or more kinds of fillers may be added mainly in order to reinforce the resin composition and to improve properties such as stiffness, heat resistance and dimensional accuracy. The configurations such as shape of the fillers are not particularly limited, and the fillers may be organic fillers or inorganic fillers. Specific examples thereof include glass fibers, glass flakes, glass beads, milled fibers, alumina fibers, carbon fibers, aramid fibers, titanium oxide, magnesium oxide, calcium carbonate, barium sulfate, boron nitride, potassium titanate whiskers, silica, mica, talc and wollastonite. Of these, preferred fillers include glass fibers.

Glass fibers, which may be preferably used in the invention, preferably have an average diameter of not more than 20 µm, and more preferably 1 to 15 µm. Such glass fibers are preferable because the balance of properties (heat resistant stiffness, impact strength) is further enhanced as well as because warpage after shaping is further reduced.

The length of the glass fibers is not particularly limited, and appropriate fibers may be selected from any types of fibers such as continuous fibers (roving) and discontinuous fibers (chopped strands). The number of filaments collected is preferably about 100 to 5,000. Ground strands called milled fibers and glass powders, or slivers of continuous monofilaments are also usable as long as the glass fibers in the resin composition have an average length of not less than 0.1 mm after the resin composition is produced by kneading. The chemical composition of the material glass is preferably free of alkalis, with examples of such glass including E glass, C glass and S glass. In the present invention, E glass is preferably used.

When the polyphenylene ether resin composition of the invention contains the filler, the content thereof is preferably 1 to 80 parts by weight, and more preferably 5 to 60 parts by weight with respect to 100 parts by weight of the resin component (A). When the content of the filler is not less than the above lower limit, mechanical strength tends to be improved effectively. When the content is not more than the above upper limit, fluidity and appearance of shaped articles can be improved.

### <Others>

The polyphenylene ether resin composition of the invention may further contain any of various additives such as UV absorbers, antioxidants, weather resistance improvers other than carbon blacks, nucleating agents, foaming agents, lubricants, plasticizers, fluidity improvers, dispersants, conductive agents and antistatic agents.

### [Production method]

The polyphenylene ether resin composition of the invention may be produced by any method without limitation, but is preferably by melt-kneading. Any kneading method practically used for thermoplastic resins may be adopted. For example, the components such as the polyphenylene ether resin, the styrene resin, the carbon black, the alkaline earth metal carbonate and/or sulfate, and other optional components may be homogeneously mixed together with an apparatus such as a Henschel mixer, a ribbon blender or a twin-cylinder mixer, and the resultant mixture may be kneaded with an apparatus such as a single- or multi-screw kneading extruder, rolls, a Bunbury mixer or Labo Plastomill (Brabender). The components may be fed to the mixing kneader collectively or successively. Alternatively, two or more kinds of components selected from the components may be mixed beforehand. Still alternatively, any component, in particular the carbon black, may be used as a masterbatch by being preliminarily mixed with a resin component such as the styrene resin.

The kneading temperature and the kneading time may be selected appropriately in accordance with conditions such as desired types of the resin compositions and types of mixing kneaders. The kneading temperature is usually 200 to 350°C, preferably 220 to 320°C, and the kneading time is preferably not more than 20 minutes. An excessively high temperature causes problematic thermal deteriorations of the polyphenylene ether resin and the styrene resin, possibly resulting in a decrease in properties of shaped articles and a poor appearance of shaped articles.

### [Shaping methods]

The polyphenylene ether resin composition of the invention may be shaped by any shaping methods commonly used for thermoplastic resins, such as injection molding, injection compression molding, blow molding, extrusion, sheet forming, thermoforming, rotational molding, laminate molding and press molding.

### [Suitable properties]

The polyphenylene ether resin composition of the invention preferably has the following properties.
(a) The comparative tracking index (CTI) measured in accordance with IEC 60112 with a thickness of 3 mm is not less than 250 V.
(b) The notched Charpy impact strength measured in accordance with ISO 179 at 23°C is not less than 7 kJ/m².
(c) The flame retardance measured in accordance with UL 94 with a thickness of 0.75 mm is V-0.
(d) The value L measured in accordance with JIS Z-8722 is not more than 10.

By satisfying the property (a), the composition achieves excellent tracking resistance.

By satisfying the property (b), the composition achieves excellent impact resistance. In particular, the Charpy impact strength (b) is preferably not less than 12 kJ/m² for use in applications requiring high impact resistance.

By satisfying the property (c), the composition achieves excellent flame retardance.

By satisfying the property (d), the composition achieves a high degree of blackness and excellent weather resistance. In particular, the value L (d) is preferably not more than 9.5.

In more detail, the properties (a) to (d) are measured by methods described in EXAMPLES.

### [Polyphenylene ether resin shaped articles]

The polyphenylene ether resin composition of the invention may be shaped into articles having any shape without limitation. Various shaped articles such as films, sheets and boxes may be provided.

Further, the applications of the shaped articles are not particularly limited. The shaped articles of the invention may be used for various applications in a wide range of fields such as the aforementioned photovoltaic module parts including photovoltaic module connection structures, as well as automobile parts, parts of electric devices, electronic devices and OA devices, and building parts. Because the shaped articles satisfy the properties (a) to (d) with a good balance, they are particularly useful as photovoltaic module parts.

### EXAMPLES

Hereinbelow, the present invention will be described in greater detail by illustrating EXAMPLES. However, the invention is not limited to such EXAMPLES and may be modified within the scope of the invention.

Materials and methods for evaluating resin compositions used in the following EXAMPLES are as follows.

### [Materials]

### <Polyphenylene ether resins>

PPE-1: poly(2,6-dimethyl-1,4-phenylene) ether, "PX100F" manufactured by Polyxylenol Singapore Pte. Ltd., intrinsic viscosity 0.37 dl/g as measured at 30°C in chloroform.
PPE-2: poly(2,6-dimethyl-1,4-phenylene) ether, "PX100L" manufactured by Polyxylenol Singapore Pte. Ltd., intrinsic viscosity 0.47 dl/g as measured at 30°C in chloroform.

### <Styrene resin>

Styrene resin: high-impact polystyrene (HIPS), "HT478" manufactured by PS Japan Corporation, molecular weight (Mw) 200,000, MFR 3.0 g/10 min (testing conditions: 200°C, 5 kgf).

### <Carbon blacks>

Carbon black masterbatch: "BLACK SBF-M8800" manufactured by RESINO COLOR INDUSTRY CO., LTD., polystyrene-based masterbatch containing 45 wt% of carbon black ("MCF88" manufactured by Mitsubishi Chemical Corporation).
Carbon black-1: "MCF88" manufactured by Mitsubishi Chemical Corporation, average primary particle diameter 18 nm, DBP oil absorption amount 55 cm³/100 g.
Carbon black-2: "No. 1000" manufactured by Mitsubishi Chemical Corporation, average primary particle diameter 18 nm, DBP oil absorption amount 56 cm³/100 g.
Carbon black-3: "No. 900" manufactured by Mitsubishi Chemical Corporation, average primary particle diameter 16 nm, DBP oil absorption amount 56 cm³/100 g.
Carbon black-4: "No. 2700B" manufactured by Mitsubishi Chemical Corporation, average primary particle diameter 13 nm, DBP oil absorption amount 57 cm³/100 g.
Carbon black-5: "No. 750B" manufactured by Mitsubishi Chemical Corporation, average primary particle diameter 22 nm, DBP oil absorption amount 116 cm³/100 g.
Carbon black-6: insulating carbon black "TML41" manufactured by Mitsubishi Chemical Corporation, average primary particle diameter 24 nm, DBP oil absorption amount 83 cm³/100 g.
Carbon black-7: "SEAST SP" manufactured by Toyo Carbon, average primary particle diameter 95 nm, DBP oil absorption amount 51 cm³/100 g.
Carbon black-8: "SEAST TA" manufactured by Toyo Carbon, average primary particle diameter 122 nm, DBP oil absorption amount 42 cm³/100 g.
Carbon black-9: "REGAL 400" manufactured by Cabot Japan, average primary particle diameter 25 nm, DBP oil absorption amount 69 cm³/100 g.
Carbon black-10: "BLACK PEARLS 1000" manufactured by Cabot Japan, average primary particle diameter 16 nm, DBP oil absorption amount 105 cm³/100 g.

### <Components (C)>

Barium sulfate: "B-55" manufactured by SAKAI CHEMICAL INDUSTRY CO., LTD., average particle diameter 0.8 µm.

Barium carbonate: "barium carbonate" manufactured by Wako Pure Chemical Industries, Ltd., average particle diameter 1.0 µm.

Strontium carbonate: "SW-P" manufactured by SAKAI CHEMICAL INDUSTRY CO., LTD., average particle diameter 1.0 µm.
Colloidal calcium carbonate-1: "Vigot-15" manufactured by Shiraishi Kogyo Kaisha, Ltd., average particle diameter 0.15 µm.
Colloidal calcium carbonate-2: "HAKUENKA CC-R" manufactured by Shiraishi Kogyo Kaisha, Ltd., average particle diameter 0.08 µm.
Heavy calcium carbonate-3: "NS No. 100" manufactured by AMAKASU CHEMICAL INDUSTRIES, average particle diameter 2.1 µm.
Heavy calcium carbonate-4: "NS No. 2500" manufactured by AMAKASU CHEMICAL INDUSTRIES, average particle diameter 0.9 µm.

### <Comparative components other than components (C)>

Calcium chloride: "calcium chloride" manufactured by Wako Pure Chemical Industries, Ltd., average particle diameter 350 µm.

Barium acetate: "barium acetate" manufactured by Wako Pure Chemical Industries, Ltd., average particle diameter 100 µm.

Alumina: "AL-43KT" manufactured by Showa Denko K.K., average particle diameter 4.6 µm.

Magnesium hydroxide: "KISUMA 5A" manufactured by Kyowa Chemical Industry Co., Ltd., average particle diameter 0.8 µm.

Magnesium stearate: "Mg-St" manufactured by NITTO KASEI CO., LTD., average particle diameter 10 µm.

Talc: fine powdery talc, "MICELTONE" manufactured by Hayashi-Kasei Co., Ltd., average particle diameter 1.4 µm.

Boron nitride: hexagonal boron nitride, "SP-2" manufactured by DENKI KAGAKU KOGYO KABUSHIKI KAISHA, average particle diameter 4.0 µm.

### <Flame retardants>

Flame retardant-1: triphenyl phosphate, "TPP" manufactured by DAIHACHI CHEMICAL INDUSTRY CO., LTD.
Flame retardant-2: resorcinol bis(diphenyl phosphate), "CR-733S" manufactured by DAIHACHI CHEMICAL INDUSTRY CO., LTD.

### <Other additives>

Flame retardant auxiliary: polytetrafluoroethylene, "METABLEN A3800" manufactured by MITSUBISHI RAYON CO., LTD.

Mold release agent: oxidized polyethylene wax, "SANWAX 151P" manufactured by Sanyo Chemical Industries, Ltd.

Heat stabilizer: zinc oxide, "zinc oxide II" manufactured by Honjo Chemical.

Elastomer: SEBS, "SEPTON 8006" manufactured by KURARAY PLASTICS CO., Ltd.

### [Evaluation methods]

### 1) Content of high-molecular weight polyphenylene ether resin according to GPC

In 200 ml of toluene, 10 g of pellets of a resin composition obtained by a method described later were dissolved. The solution was cooled (-10°C) and thereafter filtered. The solution was then poured into about 1 L of methanol while performing stirring, thus forming a precipitate. The precipitate was filtered off, sufficiently washed with methanol, and dried (under a reduced pressure at 140°C for 1 hour). The dried precipitate was dissolved into chloroform, and the solution was subjected to GPC (gel permeation chromatography) under the following conditions.

GPC: "HPLC 8020" manufactured by TOSOH CORPORATION.
Columns: "TSK G5000HHR + G3000HHR" manufactured by TOSOH CORPORATION.
Temperature: 40°C
Solvent: chloroform
Flow rate: 1.0 ml/min
Detection: UV 283 nm
Calculation: standard polystyrene samples (having molecular weights of 264, 364, 466, 568, 2,800, 16,700, 186,000 and 1,260,000; UV detection wavelength 254 nm).

From the results of GPC, the content of high-molecular weight polyphenylene ether resin with a molecular weight of not less than 500,000 in the entirety of the polyphenylene ether resin was calculated.

### 2) Tracking resistance-1

Pellets of a resin composition obtained by a method described later were dried at 80°C for 2 hours and then molded into 100 mm x 100 mm specimens with a thickness of 3 mm using an injection molding apparatus ("EC160NII" manufactured by TOSHIBA MACHINE CO., LTD.) at a cylinder temperature of 280°C and a mold temperature of 80°C. The comparative tracking index (CTI) was measured in accordance with IEC 60112. The applied voltage was an integer multiple of 25 V.

### 3) Tracking resistance-2

Pellets of a resin composition obtained by a method described later were dried at 80°C for 2 hours and then molded into 100 mm x 100 mm specimens with a thickness of 3 mm using an injection molding apparatus ("EC160NII" manufactured by TOSHIBA MACHINE CO., LTD.) at a cylinder temperature of 280°C and a mold temperature of 80°C. The specimens were tested in accordance with IEC 60112 under the application of a voltage of 250 V or 275 V so as to determine the number of droplets of an aqueous ammonium chloride solution dropped until dielectric breakdown occurred. The larger the number of droplets, the higher the tracking resistance.

### 4) Deflection temperature under load

Pellets of a resin composition obtained by a method described later were dried at 80°C for 2 hours and then molded into ISO specimens using an injection molding apparatus ("EC160NII" manufactured by TOSHIBA MACHINE CO., LTD.) at a cylinder temperature of 280°C and a mold temperature of 80°C. As an indicator of heat resistance, the deflection temperature under a load of 1.8 MPa was measured in accordance with ISO 75.

### 5) Charpy impact strength

Pellets of a resin composition obtained by a method described later were dried at 80°C for 2 hours and then molded into ISO specimens using an injection molding apparatus ("EC160NII" manufactured by TOSHIBA MACHINE CO., LTD.) at a cylinder temperature of 280°C and a mold temperature of 80°C. The specimens were notched and tested in accordance with ISO 179 to determine the Charpy impact strength at 23°C and -30°C.

### 6) Tensile test

Pellets of a resin composition obtained by a method described later were dried at 80°C for 2 hours and then molded into ISO specimens using an injection molding apparatus ("EC160NII" manufactured by TOSHIBA MACHINE CO., LTD.) at a cylinder temperature of 280°C and a mold temperature of 80°C. The specimens were tested in accordance with ISO 527 to determine the yield stress in tension.

### 7) Value L

Pellets of a resin composition obtained by a method described later were dried at 80°C for 2 hours and then molded into 100 mm x 100 mm specimens with a thickness of 3 mm using an injection molding apparatus ("EC160NII" manufactured by TOSHIBA MACHINE CO., LTD.) at a cylinder temperature of 280°C and a mold temperature of 80°C. The value L was measured in accordance with JIS Z-8722 using a spectrophotometric colorimeter having multiple light sources ("MSC-5N-GV5" manufactured by Suga Test Instruments Co., Ltd.) under conditions such that the optical system was d/8 and the light flux diameter was 15 mm. The lower the value L, the higher the degree of blackness and more preferable.

### 8) Flame retardance

Pellets of a resin composition obtained by a method described later were dried at 80°C for 2 hours and then molded into 127 mm x 12.7 mm specimens with a thickness of 0.75 mm using an injection molding apparatus ("J50EP" manufactured by The Japan Steel Works, Ltd.) at a cylinder temperature of 280°C and a mold temperature of 80°C. The specimens were tested in accordance with UL 94.

### 9) Retention of nominal tensile strain at break

Pellets of a resin composition obtained by a method described later were dried at 80°C for 2 hours and then molded into ISO specimens using an injection molding apparatus ("EC160NII" manufactured by TOSHIBA MACHINE CO., LTD.) at a cylinder temperature of 280°C and a mold temperature of 80°C. The specimens were subjected to a sunshine fade test (no rain) at 83°C. The specimens exposed to sunshine for 0, 100, 300 and 1000 hours were tested in accordance with ISO 527 to determine the nominal tensile strain at break. As an indicator of weather resistance, the retention of nominal tensile strain at break was measured relative to the unexposed specimen (exposure time 0 hours). The higher the retention of nominal tensile strain at break, the higher the weather resistance.

### [EXAMPLES 1 to 12, 15 to 18 and 23 to 30, COMPARATIVE EXAMPLES 1 to 10, and REFERENCE EXAMPLES 1, 13, 14 and 19 to 22]

Components described in Tables 1 to 4 were homogeneously mixed together at proportions shown in Tables 1 to 4 using a tumbling mixer. Each of the resultant mixtures was melt-kneaded with twin-screw extruder "PCM-30" manufactured by IKEGAI CORP. at a barrel temperature of 280°C and a rotational speed of 150 rpm, and was extruded into a strand. The strand was cooled and pelletized into pellets. In Tables 1 to 4, the amounts of the additives except the polyphenylene ether resin and the styrene resin are parts relative to 100 parts by weight of the total of the polyphenylene ether resin and the styrene resin.

### [Evaluation results]

The evaluation results are described in Tables 1 to 4.

**[Table 1]**

| EXAMPLES 13 and 14 are REFERENCE EXAMPLES. | | | | | | | | | | | | | | | | | |
|---|---|---|---|---|---|---|---|---|---|---|---|---|---|---|---|---|---|
| | | | | EXAMPLES | | | | | | | | | | | | | |
| | | | | 1 | 2 | 3 | 4 | 5 | 6 | 7 | 8 | 9 | 10 | 11 | 12 | 13 | 14 |
| | PPE-1 | | wt% | | | | | | | 90 | | | | | | | |
| | PPE-2 | | | 90 | 90 | 90 | 90 | 90 | 90 | | 90 | 90 | 94 | 93 | 92 | 90 | 90 |
| | Styrene resin | | | 10 | 10 | 10 | 10 | 10 | 10 | 10 | 10 | 10 | 6 | 7 | 8 | 10 | 10 |
| | Flame retardant-1 | | Parts by weight | 7 | 7 | 7 | 7 | 7 | 7 | 7 | 7 | 7 | 8 | 8 | 7 | 7 | 7 |
| | Flame retardant-2 | | | 7 | 7 | 7 | 7 | 7 | 7 | 7 | 7 | 7 | 8 | 8 | 8 | 7 | 7 |
| | Heat stabilizer | | | 0.21 | 0.21 | 0.21 | 0.21 | 0.21 | 0.21 | 0.21 | 0.21 | 0.21 | 0.22 | 0.22 | 0.22 | 0.21 | 0.21 |
| Formulations of polyphenylene ether resin compositions | Mold release agent | | | 1.50 | 1.50 | 1.50 | 1.50 | 1.50 | 1.50 | 1.50 | 1.50 | 1.50 | 1.60 | 1.60 | 1.60 | 1.50 | 1.50 |
| | Flame retardant auxiliary | | | 0.35 | 0.35 | 0.35 | 0.35 | 0.35 | 0.35 | 0.35 | 0.35 | 0.35 | 0.37 | 0.37 | 0.36 | 0.35 | 0.35 |
| | Carbon black masterbatch* | | | 1.29 (0.58) | 1.29 (0.58) | 1.29 (0.58) | 1.29 (0.58) | 1.29 (0.58) | 1.29 (0.58) | 1.29 (0.58) | 0.79 (0.36) | 0.79 (0.36) | 1.29 (0.58) | 1.29 (0.58) | 1.29 (0.58) | | |
| | Carbon black-7 | | | | | | | | | | | | | | | 0.58 | |
| | Carbon black-10 | | | | | | | | | | | | | | | | 0.58 |
| | Elastomer | | | | | | | | | | | | 4.9 | 3.7 | 2.4 | | |
| | Barium sulfate | | | 2.4 | 5.9 | 12 | | | | 2.4 | 1.2 | 2.4 | 2.4 | 2.4 | 2.4 | 2.4 | 2.4 |
| | Barium carbonate | | | | | | 2.4 | | | | | | | | | | |
| | Strontium carbonate | | | | | | | 2.4 | | | | | | | | | |
| | Colloidal calcium carbonate-1 | | | | | | | | 2.4 | | | | | | | | |
| Content of high-molecular weight polyphenylene ether resin in polyphenylene ether resin | | | wt% | 0.15 | 0.14 | 0.13 | 0.15 | 0.15 | 0.15 | 0 | 0.16 | 0.15 | 0.16 | 0.16 | 0.16 | 0.15 | 0.15 |
| Evaluation results | Tracking resistance-1 | | V | 275 | 325 | 375 | 275 | 275 | 275 | 275 | 250 | 275 | 275 | 275 | 250 | 250 | 250 |
| | Deflection temperature under load | 1.8MPa | °C | 117 | 117 | 117 | 116 | 117 | 117 | 117 | 117 | 117 | 114 | 113 | 114 | 117 | 117 |
| | Notched Charpy impact strength | 23°C | kJ/m² | 7.8 | 8.4 | 9.2 | 6.6 | 6.6 | 7.6 | 6.2 | 7.5 | 8.2 | 27.0 | 23.1 | 14.0 | 8.1 | 8.0 |
| | | -30°C | kJ/m² | 5.7 | 5.5 | 5.5 | 5.5 | 5.4 | 5.8 | 4.5 | 5.9 | 5.7 | 9.5 | 8.3 | 7.2 | 5.3 | 5.5 |
| | Tensile test | Yield stress | MPa | 76.6 | 75.6 | 73.9 | 76.8 | 76.6 | 76.3 | 76.3 | 77.1 | 76.8 | 67.0 | 69.2 | 70.7 | 75.4 | 76.0 |
| | Value L | | - | 8.2 | 8.4 | 8.6 | 8.3 | 8.4 | 8.4 | 8.3 | 9.1 | 9.2 | 9.2 | 8.9 | 8.7 | 12.6 | 8.4 |
| | Flame retardance | | - | V-0 | V-0 | V-0 | V-0 | V-0 | V-0 | V-0 | V-0 | V-0 | V-0 | V-0 | V-0 | V-0 | V-0 |
| | Retention of nominal tensile strain at break | 100 hr | % | 81 | | | | | | 60 | | | | | | | |
| | | 300 hr | | 70 | | | | | | 45 | | | | | | | |
| | | 1000 hr | | 63 | | | | | | 34 | | | | | | | |

| | | | | | | | | | | | | | | | | | |
|---|---|---|---|---|---|---|---|---|---|---|---|---|---|---|---|---|---|
| *The numerical values in parentheses indicate amounts of carbon blacks relative to 100 parts by weight of the total of the polyphenylene ether resin and the styrene resin (except the polystyrene in the masterbatch). | | | | | | | | | | | | | | | | | |

**[Table 2]**

| | | | | COMPARATIVE EXAMPLES | | | | | | | | REF. EX. |
|---|---|---|---|---|---|---|---|---|---|---|---|---|
| | | | | 1 | 2 | 3 | 4 | 5 | 6 | 7 | 8 | 1 |
| | PPE-2 | | wt% | 90 | 90 | 90 | 90 | 90 | 90 | 90 | 90 | 91 |
| | Styrene resin | | | 10 | 10 | 10 | 10 | 10 | 10 | 10 | 10 | 9 |
| | Flame retardant-1 | | Parts by weight | 7 | 7 | 7 | 7 | 7 | 7 | 7 | 7 | 7 |
| | Flame retardant-2 | | | 7 | 7 | 7 | 7 | 7 | 7 | 7 | 7 | 7 |
| | Heat stabilizer | | | 0.21 | 0.21 | 0.21 | 0.21 | 0.21 | 0.21 | 0.21 | 0.21 | 0.21 |
| | Mold release agent | | | 1.50 | 1.50 | 1.50 | 1.50 | 1.50 | 1.50 | 1.50 | 1.50 | 1.50 |
| Formulations of polyphenylene ether resin compositions | Flame retardant auxiliary | | | 0.35 | 0.35 | 0.35 | 0.35 | 0.35 | 0.35 | 0.35 | 0.35 | 0.35 |
| | Carbon black masterbatch* | | | 1.29 (0.58) | 1.29 (0.58) | 1.29 (0.58) | 1.29 (0.58) | 1.29 (0.58) | 1.29 (0.58) | 1.29 (0.58) | 1.29 (0.58) | |
| | Barium sulfate | | | | | | | | | | | 2.4 |
| | Barium carbonate | | | | | | | | | | | |
| | Calcium chloride | | | | 2.4 | | | | | | | |
| | Barium acetate | | | | | 2.4 | | | | | | |
| | Alumina | | | | | | 1.2 | | | | | |
| | Magnesium hydroxide | | | | | | | 1.2 | | | | |
| | Magnesium stearate | | | | | | | | 1.2 | | | |
| | Talc | | | | | | | | | 1.2 | | |
| | Boron nitride | | | | | | | | | | 1.2 | |
| Content of high-molecular weight polyphenylene ether resin in polyphenylene ether resin | | | wt% | | | | | | | | | 0.14 |
| Evaluation results | Tracking resistance-1 | | V | 225 | 175 | 225 | 225 | 225 | 225 | 225 | 225 | > 600 |
| | Deflection temperature under load | 1.8MPa | °C | 117 | 119 | 116 | 118 | 117 | 116 | 118 | 119 | 116 |
| | Notched Charpy impact strength | 23°C | kJ/m² | 7.3 | 9.0 | 5.3 | 7.2 | 7.5 | 7.1 | 7.0 | 7.0 | 8.0 |
| | | -30°C | kJ/m² | 5.4 | 6.4 | 4.8 | 5.5 | 5.7 | 5.1 | 5.1 | 5.1 | 5.7 |
| | Tensile test | Yield stress | MPa | 77.5 | 73.7 | 75.5 | 78.0 | 76.2 | 75.9 | 77.8 | 77.2 | 77.5 |
| | Value L | | - | 7.8 | 16.9 | 8.4 | 8.2 | 8.3 | 7.7 | 8.0 | 12.1 | 68.8 |
| | Flame retardance | | - | V-0 | V-0 | V-0 | V-0 | V-0 | V-0 | V-0 | V-0 | V-0 |
| | Retention of nominal tensile strain at break | 100 hr | % | | | | | | | | | 51 |
| | | 300 hr | | | | | | | | | | 32 |
| | | 1000 hr | | | | | | | | | | 27 |

| | | | | | | | | | | | | |
|---|---|---|---|---|---|---|---|---|---|---|---|---|
| * The numerical values in parentheses indicate amounts of carbon blacks relative to 100 parts by weight of the total of the polyphenylene ether resin and the styrene resin (except the polystyrene in the masterbatch). | | | | | | | | | | | | |

**[Table 3]**

| EXAMPLES 13, 14 and 19 to 22 are REFERENCE EXAMPLES. | | | | | | | | | | | | | |
|---|---|---|---|---|---|---|---|---|---|---|---|---|---|
| | | | | EXAMPLES | | | | | | | | | |
| | | | | 15 | 16 | 17 | 18 | 19 | 20 | 13 | 21 | 22 | 14 |
| | PPE-2 | | wt% | 90 | 90 | 90 | 90 | 90 | 90 | 90 | 90 | 90 | 90 |
| | Styrene resin | | | 10 | 10 | 10 | 10 | 10 | 10 | 10 | 10 | 10 | 10 |
| | Flame retardant-1 | | | 7 | 7 | 7 | 7 | 7 | 7 | 7 | 7 | 7 | 7 |
| | Flame retardant-2 | | | 7 | 7 | 7 | 7 | 7 | 7 | 7 | 7 | 7 | 7 |
| | Heat stabilizer | | | 0.21 | 0.21 | 0.21 | 0.21 | 0.21 | 0.21 | 0.21 | 0.21 | 0.21 | 0.21 |
| | Mold release agent | | | 1.50 | 1.50 | 1.50 | 1.50 | 1.50 | 1.50 | 1.50 | 1.50 | 1.50 | 1.50 |
| | Flame retardant auxiliary | | | 0.35 | 0.35 | 0.35 | 0.35 | 0.35 | 0.35 | 0.35 | 0.35 | 0.35 | 0.35 |
| Formulations of polyphenylene ether resin compositions | Carbon black-1 | | | 0.58 | | | | | | | | | |
| | Carbon black-2 | | | | 0.58 | | | | | | | | |
| | Carbon black-3 | | Parts by weight | | | 0.58 | | | | | | | |
| | Carbon black-4 | | | | | | 0.58 | | | | | | |
| | Carbon black-5 | | | | | | | 0.58 | | | | | |
| | Carbon black-6 | | | | | | | | 0.58 | | | | |
| | Carbon black-7 | | | | | | | | | 0.58 | | | |
| | Carbon black-8 | | | | | | | | | | 0.58 | | |
| | Carbon black-9 | | | | | | | | | | | 0.58 | |
| | Carbon black-10 | | | | | | | | | | | | 0.58 |
| | Barium sulfate | | | 2.4 | 2.4 | 2.4 | 2.4 | 2.4 | 2.4 | 2.4 | 2.4 | 2.4 | 2.4 |
| Carbon black properties | Average primary particle diameter | | nm | 18 | 18 | 16 | 13 | 22 | 24 | 95 | 122 | 25 | 16 |
| | DBP oil absorption amount | | cm³/100g | 55 | 56 | 56 | 57 | 116 | 83 | 51 | 42 | 69 | 105 |
| Evaluation results | Value L | | - | 8.2 | 8.4 | 8.3 | 8.0 | 9.9 | 9.5 | 12.6 | 13.1 | 9.5 | 8.4 |
| | Tracking resistance-2 | 250V | Droplets | >61 | >61 | >61 | >61 | >61 | >61 | >61 | >61 | >61 | >61 |
| | | 275V | Droplets | 52 | 54 | 50 | 45 | 35 | 44 | 37 | 40 | 35 | 38 |

**[Table 4]**

| | | | | EX. | | | | COMP. EX. | EX. | | | | COMP. EX. |
|---|---|---|---|---|---|---|---|---|---|---|---|---|---|
| | | | | 23 | 24 | 25 | 26 | 9 | 27 | 28 | 29 | 30 | 10 |
| Formulations of polyphenylene ether resin compositions | PPE-2 | | | 95.1 | 95.1 | 95.1 | 95.1 | 95.1 | 96.1 | 96.1 | 96.1 | 96.1 | 96.1 |
| | Styrene resin | | | 4.9 | 4.9 | 4.9 | 4.9 | 4.9 | 3.9 | 3.9 | 3.9 | 3.9 | 3.9 |
| | Flame retardant-1 | | Parts by weight | 7.7 | 7.7 | 7.7 | 7.7 | 7.7 | 7.8 | 7.8 | 7.8 | 7.8 | 7.8 |
| | Flame retardant-2 | | | 8.9 | 8.9 | 8.9 | 8.9 | 8.9 | 8.8 | 8.8 | 8.8 | 8.8 | 8.8 |
| | Heat stabilizer | | | 0.2 | 0.2 | 0.2 | 0.2 | 0.2 | 0.2 | 0.2 | 0.2 | 0.2 | 0.2 |
| | Mold release agent | | | 1.6 | 1.6 | 1.6 | 1.6 | 1.6 | 1.6 | 1.6 | 1.6 | 1.6 | 1.6 |
| | Flame retardant auxiliary | | | 0.4 | 0.4 | 0.4 | 0.4 | 0.4 | 0.4 | 0.4 | 0.4 | 0.4 | 0.4 |
| | Carbon black masterbatch* | | | 1.4 (0.63) | 1.4 (0.63) | 1.4 (0.63) | 1.4 (0.63) | 1.4 (0.63) | 1.4 (0.63) | 1.4 (0.63) | 1.4 (0.63) | 1.4 (0.63) | 1.4 0.63 |
| | Elastomer | | | 5.0 | 5.0 | 5.0 | 5.0 | 5.0 | 5.0 | 5.0 | 5.0 | 5.0 | 5.0 |
| | Barium sulfate | | | 2.5 | | | | | 2.5 | | | | |
| | Colloidal calcium carbonate-1 | | | | 2.5 | | | | | 2.5 | 3.8 | | |
| | Colloidal calcium carbonate-2 | | | | | | | | | | | 2.5 | |
| | Heavy calcium carbonate-3 | | | | | 2.5 | | | | | | | |
| | Heavy calcium carbonate-4 | | | | | | 2.5 | | | | | | |
| Content of high-molecular weight polyphenylene ether resin in polyphenylene ether resin | | | wt% | 0.16 | 0.16 | 0.16 | 0.15 | 0.16 | 0.16 | 0.16 | 0.15 | 0.16 | 0.15 |
| Evaluation results | Tracking resistance-1 | | V | 275 | 275 | 275 | 275 | 225 | 275 | 275 | 325 | 300 | 225 |
| | Deflection temperature under load | 1.8MPa | °C | 114.3 | 114.2 | 113.2 | 113.6 | 114.2 | 117.0 | 115.8 | 115.7 | 116.7 | 116.4 |
| | Notched Charpy impact strength | 23°C | kJ/m² | 26.8 | 25.0 | 10.0 | 13.2 | 25.2 | 24.3 | 23.8 | 23.1 | 24.6 | 24.9 |
| | | -30°C | kJ/m² | 9.0 | 8.7 | 5.7 | 7.1 | 8.6 | 10.1 | 8.5 | 8.3 | 8.3 | 8.3 |
| | Tensile test | Yield stress | MPa | 67.0 | 67.2 | 66.0 | 66.5 | 67.3 | 68.1 | 67.9 | 67.3 | 68.0 | 68.7 |
| | Value L | | - | 9.2 | 9.2 | 9.7 | 9.5 | 8.9 | 9.2 | 9.2 | 9.0 | 9.2 | 9.0 |
| | Flame retardance | | - | V-0 | V-0 | V-0 | V-0 | V-0 | V-0 | V-0 | V-0 | V-0 | V-0 |

| | | | | | | | | | | | | | |
|---|---|---|---|---|---|---|---|---|---|---|---|---|---|
| *The numerical values in parentheses indicate amounts of carbon blacks relative to 100 parts by weight of the total of the polyphenylene ether resin and the styrene resin (except the polystyrene in the masterbatch). | | | | | | | | | | | | | |

### [Discussions]

The following are apparent from Tables 1 to 4.

The polyphenylene ether resin compositions of EXAMPLES 1 to 12, 15 to 18 and 23 to 30, and REFERENCE EXAMPLES 13, 14 and 19 to 22 containing a carbon black and an alkaline earth metal carbonate or sulfate have been shown to be excellent in tracking resistance, exhibit good impact resistance, heat resistance and mechanical strength, and have excellent blackness and weather resistance with a low value L. In particular, surprisingly, the polyphenylene ether resin compositions of EXAMPLES 6 and 24 to 30, and the polyphenylene ether resin compositions of EXAMPLES 1 to 3 which contained calcium carbonate or barium sulfate as the alkaline earth metal carbonate or sulfate, respectively, achieved improved impact resistance at 23°C and -30°C, in spite of the fact that they contained the inorganic substance, over the resin composition of COMPARATIVE EXAMPLE 1 having the same chemical composition except that this comparative resin composition did not contain such an inorganic substance.

The comparison between EXAMPLE 1 in which the resin contained a high-molecular weight polyphenylene ether resin and EXAMPLE 7 in which the resin contained no high-molecular weight polyphenylene ether resin shows that higher weather resistance is obtained when the resin contains a high-molecular weight polyphenylene ether resin.

In contrast, COMPARATIVE EXAMPLES 1 to 10 in which the resin compositions contained a carbon black but did not contain an alkaline earth metal carbonate or sulfate resulted in poor tracking resistance and in some cases resulted in poor impact resistance.

REFERENCE EXAMPLE 1, in which no carbon black was used, provided good tracking resistance but resulted in a high value L. That is, weather resistance was low although the resin contained a high-molecular weight polyphenylene ether resin.

Table 3 describes differences in effects produced by the average primary particle diameter and the DBP oil absorption amount of the carbon blacks with respect to EXAMPLES 15 to 18 and REFERENCE EXAMPLES 13, 14 and 19 to 22. The value L tends to be high, namely, blackness and weather resistance tend to be poor in REFERENCE EXAMPLES 13 and 21 which involved the carbon blacks 7 and 8 having a large average primary particle diameter. Accordingly, it has been shown that a smaller average primary particle diameter is more preferable from the viewpoint of the value L. Further, tracking resistance in these EXAMPLES tends to be lower than in EXAMPLE 15 in which the DBP oil absorption amount was similar. Thus, it has been shown that the average primary particle diameter has some influences on tracking resistance too. Further, REFERENCE EXAMPLES 19, 20, 22 and 14 which involved the carbon blacks 5, 6, 9 and 10 with a large DBP oil absorption amount tend to result in poor tracking resistance. Thus, although such poor tracking resistance is partly ascribed to the average primary particle diameter, it has been shown that a smaller DBP oil absorption amount is more preferable from the viewpoint of tracking resistance.

## Claims

1. A polyphenylene ether resin composition comprising 100 parts by weight of a resin component (A) based on a polyphenylene ether resin (a1), 0.01 to 5 parts by weight of a carbon black (B), and 0.1 to 20 parts by weight of an alkaline earth metal carbonate and/or sulfate (C),
wherein the resin component (A) contains the polyphenylene ether resin (a1) in a content of not less than 50 wt% relative to the total amount of the resin component (A), and
wherein the carbon black (B) has an average primary particle diameter of 5 to 30 nm and a DBP oil absorption amount of 20 to 60 cm³/100 g.

2. The polyphenylene ether resin composition according to Claim 1, which has the following properties:
a) the comparative tracking index (CTI) measured in accordance with IEC 60112 with a thickness of 3 mm is not less than 250 V;
b) the notched Charpy impact strength measured in accordance with ISO 179 at 23°C is not less than 7 kJ/m²;
c) the flame retardance measured in accordance with UL 94 with a thickness of 0.75 mm is V-0; and
d) the value L measured in accordance with JIS Z-8722 is not more than 10.

3. The polyphenylene ether resin composition according to Claim 1 or 2, wherein the alkaline earth metal carbonate and/or sulfate (C) is calcium carbonate and/or barium sulfate.

4. The polyphenylene ether resin composition according to any one of Claims 1 to 3, wherein the resin component (A) includes the polyphenylene ether resin (a1) and a styrene resin (a2).

5. The polyphenylene ether resin composition according to any one of Claims 1 to 3, wherein the resin component (A) includes the polyphenylene ether resin (a1) at 85 to 100 wt% and a styrene resin (a2) at 0 to 15 wt%.

6. The polyphenylene ether resin composition according to any one of Claims 1 to 5, wherein the composition further comprises 1 to 30 parts by weight of a phosphorus-containing flame retardant (D) with respect to 100 parts by weight of the resin component (A).

7. The polyphenylene ether resin composition according to any one of Claims 1 to 6, wherein the composition further comprises 0.01 to 3 parts by weight of a flame retardant auxiliary (E) with respect to 100 parts by weight of the resin component (A).

8. The polyphenylene ether resin composition according to any one of Claims 1 to 7, wherein the composition further comprises 1 to 20 parts by weight of an elastomer (F) with respect to 100 parts by weight of the resin component (A).

9. The polyphenylene ether resin composition according to any one of Claims 1 to 8, wherein the polyphenylene ether resin (a1) contains 0.1 to 5 wt% of a polyphenylene ether resin with a weight average molecular weight of not less than 500,000.

10. Use of the polyphenylene ether resin composition according to any one of Claims 1 to 9 for a photovoltaic module connection structure.

11. A shaped article produced by shaping the polyphenylene ether resin composition of any one of Claims 1 to 9.

12. A junction box produced by shaping the polyphenylene ether resin composition of any one of Claims 1 to 9.

## Patentansprüche

1. Polyphenylenetherharzzusammensetzung, umfassend 100 Gewichtsteile einer Harzkomponente (A), die auf einem Polyphenylenetherharz (a1) basiert, 0,01 bis 5 Gewichtsteile eines Rußes (B) und 0,1 bis 20 Gewichtsteile eines Erdalkalimetallcarbonats und/oder -sulfats (C),
wobei die Harzkomponente (A) das Polyphenylenetherharz (a1) in einem Gehalt von nicht weniger als 50 Gew.%, relativ zu der Gesamtmenge der Harzkomponente (A), enthält und
worin der Ruß (B) einen durchschnittlichen Primärpartikeldurchmesser von 5 bis 30 nm und eine DBP-Öl-Absorptionsmenge von 20 bis 60 cm³/100 g aufweist.

2. Polyphenylenetherharzzusammensetzung gemäß Anspruch 1, welche die folgenden Eigenschaften aufweist:
(a) die Vergleichszahl der Kriechwegbildung (CTI), gemessen gemäß IEC 60112 mit einer Dicke von 3 mm, beträgt nicht weniger als 250 V,
(b) die Charpy-Kerbschlagzähigkeit, gemessen gemäß ISO 179 bei 23°C, beträgt nicht weniger als 7 kJ/m²,
(c) die Flammwidrigkeit, gemessen gemäß UL94 mit einer Dicke von 0,75 mm, ist V-0 und
(d) der Wert L, gemessen gemäß JIS Z-8722, beträgt nicht mehr als 10.

3. Polyphenylenetherharzzusammensetzung gemäß Anspruch 1 oder 2, wobei das Erdalkalimetallcarbonat und/oder -sulfat (C) Calciumcarbonat und/oder Bariumsulfat ist.

4. Polyphenylenetherharzzusammensetzung gemäß irgendeinem der Ansprüche 1 bis 3, wobei die Harzkomponente (A) das Polyphenylenetherharz (a1) und ein Styrolharz (a2) einschließt.

5. Polyphenylenetherharzzusammensetzung gemäß irgendeinem der Ansprüche 1 bis 3, wobei die Harzkomponente (A) das Polyphenylenetherharz (a1) zu 85 bis 100 Gew.% und ein Styrolharz (a2) zu 0 bis 15 Gew.-% einschließt.

6. Polyphenylenetherharzzusammensetzung gemäß irgendeinem der Ansprüche 1 bis 5, wobei die Zusammensetzung ferner 1 bis 30 Gewichtsteile eines Phosphor-haltigen Flammschutzmittels (D) in Bezug auf 100 Gewichtsteile der Harzkomponente (A) umfasst.

7. Polyphenylenetherharzzusammensetzung gemäß irgendeinem der Ansprüche 1 bis 6, wobei die Zusammensetzung ferner 0,01 bis 3 Gewichtsteile eines Flammschutzhilfsmittels (E) in Bezug auf 100 Gewichtsteile der Harzkomponente (A) umfasst.

8. Polyphenylenetherharzzusammensetzung gemäß irgendeinem der Ansprüche 1 bis 7, wobei die Zusammensetzung 1 bis 20 Gewichtteile eines Elastomers (F) in Bezug auf 100 Gewichtsteile der Harzkomponente (A) umfasst.

9. Polyphenylenetherharzzusammensetzung gemäß irgendeinem der Ansprüche 1 bis 8, wobei das Polyphenylenetherharz (a1) 0,1 bis 5 Gew.-% eines Polyphenylenetherharzes mit einem gewichtsgemittelten Molekulargewicht von nicht weniger als 500.000 enthält.

10. Verwendung der Polyphenylenetherharzzusammensetzung gemäß irgendeinem der Ansprüche 1 bis 9 für eine Photovoltaikmodul-Verbindungsstruktur.

11. Geformter Gegenstand, hergestellt durch Formen der Polyphenylenetherharzzsammensetzung gemäß irgendeinem der Ansprüche 1 bis 9.

12. Abzweigdose, hergestellt durch Formen der Polyphenylenetherharzzusammensetzung gemäß irgendeinem der Ansprüche 1 bis 9.

## Revendications

1. Composition de résine d'éther de polyphénylène comprenant 100 parties en poids d'un composant de résine (A) sur la base d'une résine d'éther de polyphénylène (a1), 0,01 à 5 parties en poids d'un noir de carbone (B), et 0,1 à 20 parties en poids d'un sulfate et/ou carbonate de métal alcalino-terreux (C),
dans laquelle le composant de résine (A) contient la résine d'éther de polyphénylène (a1) dans une teneur non inférieure à 50 % en poids par rapport à la quantité totale du composant de résine (A), et
dans laquelle le noir de carbone (B) a un diamètre de particule primaire moyen de 5 à 30 nm et une quantité d'absorption d'huile DBP de 20 à 60 cm³/100 g.

2. La composition de résine d'éther de polyphénylène selon la revendication 1, qui a les propriétés suivantes :
a) l'indice de suivi comparatif (ISC) mesuré en accordance avec IEC 60112 avec une épaisseur de 3 mm n'est pas inférieur à 250 V ;
b) la résistance à l'impact de Charpy entaillée mesurée en accordance avec ISO 179 à 23°C n'est pas inférieure à 7 kJ/m² ;
c) la résistance à la flamme mesurée en accordance avec UL 94 avec une épaisseur de 0,75 mm est V-0 ; et
d) la valeur L mesurée en accordance avec JIS Z-8722 n'est pas supérieure à 10.

3. La composition de résine d'éther de polyphénylène selon la revendication 1 ou 2, dans laquelle le sulfate et/ou carbonate de métal alcalino-terreux (C) est le carbonate de calcium et/ou le sulfate de baryum.

4. La composition de résine d'éther de polyphénylène selon l'une quelconque des revendications 1 à 3, dans laquelle le composant de résine (A) comporte la résine éther de polyphénylène (a1) et une résine de styrène (a2).

5. La composition de résine d'éther de polyphénylène selon l'une quelconque des revendications 1 à 3, dans laquelle le composant de résine (A) comporte la résine d'éther de polyphénylène (a1) à 85 à 100 % en poids et une résine de styrène (a2) à 0 à 15 % en poids.

6. La composition de résine d'éther de polyphénylène selon l'une quelconque des revendications 1 à 5, dans laquelle la composition comprend en outre de 1 à 30 parties en poids d'un retardateur de flamme contenant du phosphore (D) par rapport à 100 parties en poids du composant de résine (A).

7. La composition de résine d'éther de polyphénylène selon l'une quelconque des revendications 1 à 6, dans laquelle la composition comprend en outre de 0,01 à 3 parties en poids d'un auxiliaire de retardateur de flamme (E) par rapport à 100 parties en poids du composant de résine (A).

8. La composition de résine d'éther de polyphénylène selon l'une quelconque des revendications 1 à 7, dans laquelle la composition comprend en outre de 1 à 20 parties en poids d'un élastomère (F) par rapport à 100 parties en poids du composant de résine (A).

9. La composition de résine d'éther de polyphénylène selon l'une quelconque des revendications 1 à 8, dans laquelle la résine d'éther de polyphénylène (a1) contient de 0,1 à 5 % en poids d'une résine d'éther de polyphénylène avec un poids moléculaire moyen en poids non inférieur à 500000.

10. Utilisation de la composition de résine d'éther de polyphénylène selon l'une quelconque des revendications 1 à 9 pour une structure de connexion de module photovoltaïque.

11. Article formé produit en formant la composition de résine d'éther de polyphénylène de l'une quelconque des revendications 1 à 9.

12. Boîte de jonction produite en formant la composition de résine d'éther de polyphénylène de l'une quelconque des revendications 1 à 9.
